# EUROPEAN PATENT SPECIFICATION

(11) **EP 4 082 293 B1**
(45) Date of publication and mention of the grant of the patent: **03.04.2024**
(21) Application number: 21706098.7
(22) Date of filing: 22.01.2021
(51) Int. Cl.: H04W 76/15, H04W 24/10

(54) **MANAGING CONDITIONAL CONFIGURATION IN DUAL CONNECTIVITY SCENARIOS**
VERWALTEN VON BEDINGUNGSGEBUNDENER KONFIGURATION IN SZENARIEN MIT DOPPELTER KONNEKTIVITÄT
GESTION CONDITIONNEL DE CONFIGURATIONS DANS DES SCÉNARIOS AVEC DOUBLE CONNECTIVITÉ

(30) Priority: 24.01.2020 US 202062965796 P
(43) Date of publication of application: 02.11.2022
(73) Proprietor: Google LLC, Mountain View, CA 94043 (US)
(72) Inventor: WU, Chih-Hsiang, Mountain View, CA 94043 (US)
(74) Representative: Marks & Clerk GST
(86) International application number: PCT/US2021/014675
(87) International publication number: WO 2021/150930

(56) References cited:
- CATT (RAPPORTEUR): "Report on Email Discussion [107b#52][NR MobE] Open Issues Conditional PSCell Addition/Change (CATT)", 3GPP DRAFT; R2-1916300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20191118 - 20191122 23 November 2019 (2019-11-23), XP051828822, Retrieved from the Internet: URL:https://ftp.3gpp.org/tsg_ran/WG2_RL2/T SGR2_108/Docs/R2-1916300.zip R2-1916300.docx [retrieved on 2019-11-23]
- ERICSSON: "Further details on CHO failure handling", 3GPP DRAFT; R2-1914639, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20191118 - 20191122 7 November 2019 (2019-11-07), XP051815698, Retrieved from the Internet: URL:https://ftp.3gpp.org/tsg_ran/WG2_RL2/T SGR2_108/Docs/R2-1914639.zip R2-1914639 - Further details on CHO failure handling.docx [retrieved on 2019-11-07]
- ZTE CORPORATION ET AL: "Discussion on conditional PSCell addition/change", 3GPP DRAFT; R2-1913485 DISCUSSION ON CONDITIONAL PSCELL ADDITION AND CHANGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. ChongQing, China; 20191014 - 20191018 4 October 2019 (2019-10-04), XP051805009, Retrieved from the Internet: URL:https://ftp.3gpp.org/tsg_ran/WG2_RL2/T SGR2_107bis/Docs/R2-1913485.zip R2-1913485 Discussion on conditional PSCell addition and change.docx [retrieved on 2019-10-04]
- ERICSSON: "TP for 38.331 on CHO", 3GPP DRAFT; R2-1914638, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20191118 - 20191122 7 November 2019 (2019-11-07), XP051815697, Retrieved from the Internet: URL:https://ftp.3gpp.org/tsg_ran/WG2_RL2/T SGR2_108/Docs/R2-1914638.zip R2-1914638 - TP for 38.331 on conditional handover.docx [retrieved on 2019-11-07]
- QUALCOMM INCORPORATED: "Conditional NR PSCell addition/change procedures", 3GPP DRAFT; R2-1914517, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20191118 - 20191122 8 November 2019 (2019-11-08), XP051816584, Retrieved from the Internet: URL:https://ftp.3gpp.org/tsg_ran/WG2_RL2/T SGR2_108/Docs/R2-1914517.zip R2-1914517.docx [retrieved on 2019-11-08]
- SPREADTRUM COMMUNICATIONS: "Remaining issues for Conditional PSCell Change", 3GPP DRAFT; R2-1915024, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20191118 - 20191122 8 November 2019 (2019-11-08), XP051816951, Retrieved from the Internet: URL:https://ftp.3gpp.org/tsg_ran/WG2_RL2/T SGR2_108/Docs/R2-1915024.zip R2-1915024 Remaining issues for Conditional PSCell Change.doc [retrieved on 2019-11-08]
- CATT: "Conditional PScell addition/change", 3GPP DRAFT; R2-1912133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chongqing, P.R.China; 20191014 - 20191018 3 October 2019 (2019-10-03), XP051804349, Retrieved from the Internet: URL:https://ftp.3gpp.org/tsg_ran/WG2_RL2/T SGR2_107bis/Docs/R2-1912133.zip R2-1912133.docx [retrieved on 2019-10-03]
- ERICSSON: "Conditional Handover in NR", 3GPP DRAFT; R2-1900404 - CONDITIONAL HANDOVER IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20190225 - 20190301 14 February 2019 (2019-02-14), XP051601798, Retrieved from the Internet: URL:http://www.3gpp.org/ftp/tsg%5Fran/WG2% 5FRL2/TSGR2%5F105/Docs/R2%2D1900404%2Ezip [retrieved on 2019-02-14]
- QUALCOMM INCORPORATED: "Conditional NR SN Addition/Change Procedures", 3GPP DRAFT; R3-195491 CONDITIONAL SN CHANGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Chongqing, CN; 20191014 - 20191018 5 October 2019 (2019-10-05), XP051810316, Retrieved from the Internet: URL:https://ftp.3gpp.org/tsg_ran/WG3_Iu/TS GR3_105bis/Docs/R3-195491.zip R3-195491 Conditional SN change.docx [retrieved on 2019-10-05]
- CATT (RAPPORTEUR): "Report on Offline Discussion [108] agreeable proposals on Conditional PSCell Addition/Change (CATT)", 3GPP DRAFT; R2-1916329, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20191118 - 20191122 23 November 2019 (2019-11-23), XP051828848, Retrieved from the Internet: URL:https://ftp.3gpp.org/tsg_ran/WG2_RL2/T SGR2_108/Docs/R2-1916329.zip R2-1916329 offline discussion 108 on CPAC.docx [retrieved on 2019-11-23]

## Description

This disclosure relates generally to wireless communications and, more particularly, to managing conditional configuration when a user equipment (UE) operates in Multi-Radio Dual Connectivity (MR-DC).

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

In telecommunication systems, the Packet Data Convergence Protocol (PDCP) sublayer of the radio protocol stack provides services such as transfer of user-plane data, ciphering, integrity protection, etc. For example, the PDCP layer defined for the Evolved Universal Terrestrial Radio Access (EUTRA) radio interface (see 3GPP specification TS 36.323) and New Radio (NR) (see 3GPP specification TS 38.323) provides sequencing of protocol data units (PDUs) in the uplink direction (from a user device, also known as a user equipment (UE), to a base station) as well as in the downlink direction (from the base station to the UE). Further, the PDCP sublayer provides signaling radio bearers (SRBs) and data radio bearers (DRBs) to the Radio Resource Control (RRC) sublayer. Generally speaking, the UE and a base station can use SRBs to exchange RRC messages as well as non-access stratum (NAS) messages, and can use DRBs to transport data on a user plane.

UEs can use several types of SRBs and DRBs. When operating in dual connectivity (DC), the cells associated with the base station operating the master node (MN) define a master cell group (MCG), and the cells associated with the base station operating as the secondary node (SN) define the secondary cell group (SCG). So-called SRB1 resources carry RRC messages, which in some cases include NAS messages over the dedicated control channel (DCCH), and SRB2 resources support RRC messages that include logged measurement information or NAS messages, also over the DCCH but with lower priority than SRB1 resources. More generally, SRB1 and SRB2 resources allow the UE and the MN to exchange RRC messages related to the MN and embed RRC messages related to the SN, and also can be referred to as MCG SRBs. SRB3 resources allow the UE and the SN to exchange RRC messages related to the SN, and can be referred to as SCG SRBs. Split SRBs allow the UE to exchange RRC messages directly with the MN via lower layer resources of the MN and the SN. Further, DRBs using the lower-layer resources of only the MN can be referred as MCG DRBs, DRBs using the lower-layer resources of only the SN can be referred as SCG DRBs, and DRBs using the lower-layer resources of both the MCG or and the SCG can be referred to as split DRBs.

The UE in some scenarios can concurrently utilize resources of multiple RAN nodes (*e.g.,* base stations or components of a distributed base station), interconnected by a backhaul. When these network nodes support different radio access technologies (RATs), this type of connectivity is referred to as Multi-Radio Dual Connectivity (MR-DC). When a UE operates in MR-DC, one base station operates as a master node (MN) that covers a primary cell (PCell), and the other base station operates as a secondary node (SN) that covers a primary secondary cell (PSCell). The UE communicates with the MN (via the PCell) and the SN (via the PSCell). In other scenarios, the UE utilizes resources of one base station at a time. One base station and/or the UE determines that the UE should establish a radio connection with another base station. For example, one base station can determine to hand the UE over to the second base station, and initiate a handover procedure.

3GPP technical specifications (TS) 36.300 and 38.300 describes procedures for handover (or called reconfiguration with sync) scenarios. These procedures involve messaging (*e.g.,* RRC signaling and preparation) between RAN nodes that generally causes latency, which in turn increases the probability of handover procedures. These procedures do not involve conditions associated with the UE, and can be referred to as "immediate" handover procedures. R2-1914640 and R2-1914834 describes procedures for conditionally handover scenarios.

3GPP specification TS 37.340 (v15.7.0) describes procedures for a UE to add or change an SN in DC scenarios. These procedures involve messaging (e.g., RRC signaling and preparation) between radio access network (RAN) nodes. This messaging generally causes latency, which in turn increases the probability that the SN addition or SN change procedure will fail. These procedures, which do not involve conditions that are checked at the UE, can be referred to as "immediate" SN addition and SN change procedures.

UEs can also perform handover procedures to switch from one cell to another, whether in single connectivity (SC) or DC operation. The UE may handover from a cell of a first base station to a cell of a second base station, or from a cell of a first distributed unit (DU) of a base station to a cell of a second DU of the same base station, depending on the scenario. 3GPP specifications 36.300 v15.6.0 and 38.300 v15.6.0 describe a handover procedure that includes several steps (RRC signaling and preparation) between RAN nodes, which causes latency in the handover procedure and therefore increases the risk of handover failure. This procedure, which does not involve conditions that are checked at the UE, can be referred to as an "immediate" handover procedure.

More recently, for both SN or PSCell addition/change and handover, "conditional" procedures have been considered (*i*.*e*., conditional SN or PSCell addition/change and conditional handover). Unlike the "immediate" procedures discussed above, these procedures do not add or change the SN or PSCell, or perform the handover, until the UE determines that a condition is satisfied. As used herein, the term "condition" may refer to a single, detectable state or event (*e.g.,* a particular signal quality metric exceeding a threshold), or to a logical combination of such states or events (*e.g.,* "Condition A and Condition B," or "(Condition A or Condition B) and Condition C", etc.).

To configure a conditional procedure, the RAN provides the condition to the UE, along with a configuration (*e.g.,* a set of random-access preambles, etc.) that will enable the UE to communicate with the appropriate base station, or via the appropriate cell, when the condition is satisfied. For a conditional addition of a base station as an SN or a candidate cell as a PSCell, for example, the RAN provides the UE with a condition to be satisfied before the UE can add that base station as the SN or that candidate cell as the PSCell, and a configuration that enables the UE to communicate with that base station or PSCell after the condition has been satisfied.

In some scenarios, when the UE storing a conditional configuration and operating in MR-DC with an MN and an SN, the RAN can determine that the UE is to release the MR-DC. More particularly, the RAN can reconfigure the RRC connection and indicate the release of MR-DC, or release and addition of MR-DC, using a certain field of the RRC message. However, it remains unclear how the UE should manage the conditional configuration. For example, if the UE retains the conditional configuration and, subsequently to releasing MR-DC, determines that the condition is satisfied, the UE can perform a random access procedure on a PSCell to which the conditional configuration refers. However, the corresponding base station may not recognize the UE at this time, thereby causing the UE to continue attempting to connect to the PSCell.

"Report on Email Discussion [107b#52][NR MobE] Open Issues Conditional PSCell Addition/Change (CATT)" by CATT (https://ftp.3gpp.org/tsg_ran/WG2_RL2/TSGR2_108/Docs/R2-1916300.zip) relates to a basic procedure for conditional PSCell additions / changes.

"Further details on CHO failure handling" by Ericsson (https://ftp.3gpp.org/tsg_ran/WG2_RL2/TSGR2_108/Docs/R2-1914639.zip) relates to issues related to CHO failure handling such as the handling of stored CHO configurations upon reestablishment.

Discussion on conditional PSCell addition/ change" by ZTE Corporation (https://ftp.3gpp.org/tsg_ran/WG2_RL2/TSGR2_107bis/Docs/R2-1913485.zip) relates to analysis on the support of PSCell additions / changes.

"TP for 38.331 on CHO" by Ericsson (https://ftp.3gpp.org/tsg_ran/WG2_RL2/TSGR2_108/Docs/R2-1914638.zip) relates to a baseline version of CHO.

"Conditional NR PSCell addition/change procedures" by Qualcomm Incorporated (https://ftp.3gpp.org/tsg_ran/WG2_RL2/TSGR2_108/Docs/R2-1914517.zip) relates to procedures to supporting Conditional PSCell change for both MN-initiated and SN-initiated scenarios.

"Remaining issues for Conditional PSCell Change" by Spreadtrum Communications (https://ftp.3gpp.org/tsg_ran/WG2_RL2/TSGR2_108/Docs/R2-1915024.zip) relates to issues in conditional PSCell additions / changes.

### SUMMARY

The invention is carried out according to the appended independent claims. Optional features of the invention are carried out according to the dependent claims.

### BRIEF DESCRIPTION OF THE DRAWINGS

Fig. 1A is a block diagram of an example system in which a radio access network (RAN) and a user device can implement the techniques of this disclosure for managing conditional procedures related to a master node (MN) or a secondary node (SN);
Fig. 1B is another block diagram of an example system in which a radio access network (RAN) and a user device can implement the techniques of this disclosure for managing conditional procedures related to a MN or a SN;
Fig. 1C is a block diagram of an example base station in which a centralized unit (CU) and a distributed unit (DU) that can operate in the system of Fig. 1A or Fig. 1B;
Fig. 2 is a block diagram of an example protocol stack according to which the UE of Fig. 1A communicates with base stations;
Fig. 3A is a messaging diagram of an example scenario in which a UE operating in MR-DC releases a previously received conditional configuration in response to an indication that the UE is to release the MR-DC, in accordance with the techniques of this disclosure;
Fig. 3B is a messaging diagram of an example scenario similar to the scenario of Fig. 3A, but with the SN rather than the MN providing the conditional configuration;
Fig. 3C is a messaging diagram of an example scenario in which a UE operating in MR-DC releases a previously received conditional configuration in response to an indication the the UE is to release and add MR-DC, in accordance with the techniques of this disclosure;
Fig. 3D is a messaging diagram of an example scenario similar to the scenario of Fig. 3C, but with the RAN performing an SN change procedure;
Fig. 4A is a messaging diagram of an example scenario in which a UE operating in MR-DC releases a previously received conditional configuration in response to an explicit indicator received in a RRC reconfiguration message, in accordance with the techniques of this disclosure;
Fig. 4B is a messaging diagram of an example scenario similar to the scenario of Fig. 4A, but with the SN providing the explicit indicator in a message that acknowledges a request from the MN to release the SN;
Fig. 4C is a messaging diagram of an example scenario in which the SN transmits an explicit indication that the UE is to release the conditional configuration directly to the UE;
Fig. 4D is a messaging diagram of an example scenario in which a UE operating in MR-DC releases a conditional configuration for a conditional PSCell addition or change (CPAC) procedure prior to performing a procedure for releasing the MR-DC;
Fig. 4E is a messaging diagram of an example scenario in which a UE operating in MR-DC releases a conditional configuration in response to an indication that the UE is to release and add MR-DC, in accordance with the techniques of this disclosure;
Fig. 4F is a messaging diagram of an example scenario similar to the scenario of Fig. 4E, but with the RAN performing an SN change procedure;
Fig. 5A is a messaging diagram of an example scenario in which a UE operating in MR-DC retains a conditional configuration for a conditional SN addition or change (CSAC) procedure in response to an indication that the UE is to release the MR-DC, in accordance with the techniques of this disclosure;
Fig. 5B is a messaging diagram of an example scenario in which a UE operating in MR-DC releases a conditional configuration for a conditional SN addition or change (CSAC) procedure in response to an explicit indication that the UE is to release the conditional configuration, in accordance with the techniques of this disclosure;
Fig. 5C is a messaging diagram of an example scenario similar to the scenario of Fig. 5C, but with the UE applying the conditional configuration after releasing the MR-DC;
Fig. 5D is a messaging diagram of an example scenario in which a UE operating in MR-DC releases a conditional configuration for CSAC in response to an explicit indicator to release the conditional configuration received from the RAN;
Fig. 5E is a messaging diagram of an example scenario in which a UE operating in MR-DC retains a conditional configuration for CSAC in response to an indication that the UE is to release and add MR-DC;
Fig. 5F is a messaging diagram of an example scenario indication that the UE is to release the conditional configuration;
Fig. 6 is a messaging diagram of an example scenario in which a UE operating in MR-DC releases a conditional configuration and aborts a random access procedure in response to an indication that the UE is to release the MR-DC, in accordance with the techniques of this disclosure;
Fig. 7 is a messaging diagram of an example scenario in which a UE operating in MR-DC determines whether it should release the conditional configuration in view of how the RAN delivered a message indicating MR-DC release to the UE;
Fig. 8 is flow diagram of an example method for managing a conditional configuration after receiving an indication that MR-DC is to be released (or released and added), which can be implemented in a UE of this disclosure;
Fig. 9 is a flow diagram of an example method for managing a conditional configuration, which can be implemented in an SN of this disclosure;
Fig. 10 is a flow diagram of an example method for managing a conditional configuration, which can be implemented in an MN of this disclosure;
Fig. 11 is a flow diagram of an example method for configuration management when the UE operates in MR-DC, which can be implemented in a UE of this disclosure; and
Fig. 12 is a flow diagram of an example method for processing configuration, which can be implemented in a RAN of the disclosure.

### DETAILED DESCRIPTION OF THE DRAWINGS

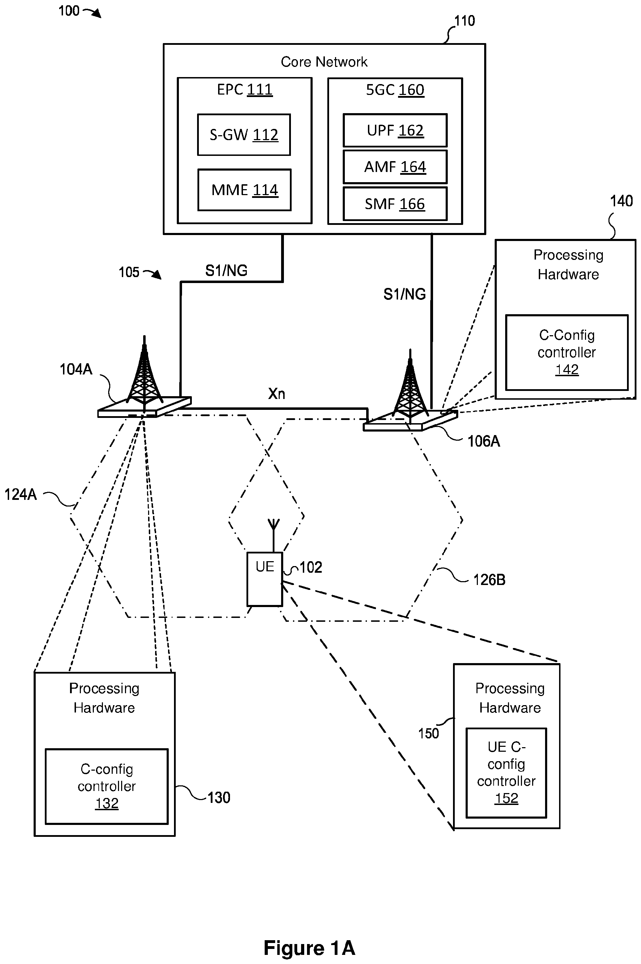

As discussed in detail below, a UE and/or one or more base stations manage conditional configuration for a procedure such as conditional handover (CHO), conditional PSCell addition or change (CPAC), or conditional SN addition or change (CSAC), when the UE operates in DC such as MR-DC. When the RAN notifies the UE that the UE is to release MR-DC, the UE determines whether it should also the conditional configuration. Prior to discussing the techniques the UE can implement to make this determination, example communication systems in which these techniques are considered with reference to Figs. 1A-C.

Referring first to Fig. 1A, an example wireless communication system 100 includes a UE 102, a base station (BS) 104A, a base station 106A, and a core network (CN) 110. The base stations 104A and 106A can operate in a RAN 105 connected to the same core network (CN) 110. The CN 110 can be implemented as an evolved packet core (EPC) 111 or a fifth generation (5G) core (5GC) 160, for example.

Among other components, the EPC 111 can include a Serving Gateway (S-GW) 112 and a Mobility Management Entity (MME) 114. The S-GW 112 in general is configured to transfer user-plane packets related to audio calls, video calls, Internet traffic, etc., and the MME 114 is configured to manage authentication, registration, paging, and other related functions. The 5GC 160 includes a User Plane Function (UPF) 162 and an Access and Mobility Management (AMF) 164, and/or Session Management Function (SMF) 166. Generally speaking, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

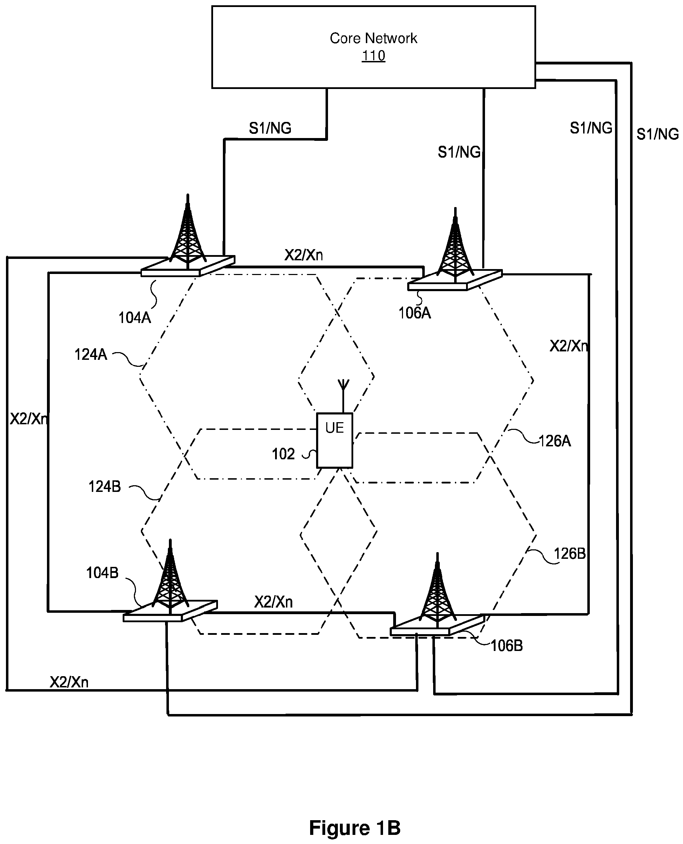

As illustrated in Fig. 1A, the base station 104A supports a cell 124A, and the base station 106A supports a cell 126A. The cells 124A and 126A can partially overlap, so that the UE 102 can communicate in DC with the base station 104A and the base station 106A operating as a master node (MN) and a secondary node (SN), respectively. To directly exchange messages during DC scenarios and other scenarios discussed below, the MN 104A and the SN 106A can support an X2 or Xn interface. In general, the CN 110 can connect to any suitable number of base stations supporting NR cells and/or EUTRA cells. An example configuration in which the EPC 110 is connected to additional base stations is discussed below with reference to Fig. 1B.

The base station 104A is equipped with processing hardware 130 that can include one or more general-purpose processors such as CPUs and non-transitory computer-readable memory storing machine-readable instructions executable on the one or more general-purpose processors, and/or special-purpose processing units. The processing hardware 130 in an example implementation includes a conditional configuration controller 132 configured to manage conditional configuration for one or more conditional procedures such as CHO, CPAC, or CSAC, when the base station 104A operates as an MN.

The base station 106A is equipped with processing hardware 140 that can also include one or more general-purpose processors such as CPUs and non-transitory computer-readable memory storing machine-readable instructions executable on the one or more general-purpose processors, and/or special-purpose processing units. The processing hardware 140 in an example implementation includes a conditional configuration controller 142 configured to manage conditional configurations for one or more conditional procedures such as CHO, CPAC, or CSAC, when the base station 106A operates as an SN.

Still referring to Fig. 1A, the UE 102 is equipped with processing hardware 150 that can include one or more general-purpose processors such as CPUs and non-transitory computer-readable memory storing machine-readable instructions executable on the one or more general-purpose processors, and/or special-purpose processing units. The processing hardware 150 in an example implementation includes a UE conditional configuration controller 152 configured to manage conditional configuration for one or conditional procedures.

More particularly, the conditional configuration controllers 132, 142, and 152 can implement at least some of the techniques discussed with reference to the messaging and flow diagrams below to receive conditional configuration, release the conditional configuration in response to certain events, apply the conditional configuration, etc. Although Fig. 1A illustrates the conditional configuration controllers 132 and 142 as separate components, in at least some of the scenarios the base stations 104A and 106A can have similar implementations and in different scenarios operate as MN or SN nodes. In these implementations, each of the base stations 104A and 106A can implement both the conditional configuration controller 132 and the conditional configuration controller 142 to support MN and SN functionality, respectively.

In operation, the UE 102 can use a radio bearer (e.g., a DRB or an SRB) that at different times terminates at the MN 104A or the SN 106A. The UE 102 can apply one or more security keys when communicating on the radio bearer, in the uplink (from the UE 102 to a BS) and/or downlink (from a base station to the UE 102) direction. The UE in some cases can use different RATs to communicate with the base stations 104A and 106A. Although the examples below may refer specifically to specific RAT types, 5G NR or EUTRA, in general the techniques of this disclosure also can apply to other suitable radio access and/or core network technologies.

Fig. 1B depicts an example wireless communication system 100 in which communication devices can implement these techniques. The wireless communication system 100 includes a UE 102, a base station 104A, a base station 104B, a base station 106A, a base station 106B and a core network (CN) 110. The UE 102 initially connects to the base station 104A. The BSs 104B and 106B may have similar processing hardware as the base station 106A. The UE 102 initially connects to the base station 104A.

In some scenarios, the base station 104A can perform immediate SN addition to configure the UE 102 to operate in dual connectivity (DC) with the base station 104A (via a PCell) and the base station 106A (via a PSCell other than cell 126A). The base stations 104A and 106A operate as an MN and an SN for the UE 102, respectively. The UE 102 in some cases can operate using the MR-DC connectivity mode, e.g., communicate with the base station 104A using 5G NR and communicate with the base station 106A using EUTRA, or communicate with the base station 104A using EUTRA and communicate with the base station 106A using 5G NR.

At some point, the MN 104A can perform an immediate SN change to change the SN of the UE 102 from the base station 106A (source SN, or "S-SN") to the base station 104B (target SN, or "T-SN") while the UE 102 is in DC with the MN 104A and the S-SN 106A. In another scenario, the SN 106A can perform an immediate PSCell change to change the PSCell of the UE 102 to the cell 126A. In one implementation, the SN 106A can transmit a configuration changing the PSCell to cell 126A to the UE 102 via a signaling radio bearer (SRB) (*e.g.,* SRB3) for the immediate PSCell change. In another implementation, the SN 106A can transmit a configuration changing the PSCell to the cell 126A to the UE 102 via the MN 104A for the immediate PSCell change. The MN 104A may transmit the configuration immediately changing the PSCell to the cell 126A to the UE 102 via SRB1.

In other scenarios, the base station 104A can perform a conditional SN Addition procedure to first configure the base station 106B as a C-SN for the UE 102, i.e. conditional SN addition or change (CSAC). At this time, the UE 102 can be in single connectivity (SC) with the base station 104A or in DC with the base station 104A and the base station 106A. If the UE 102 is in DC with the base station 104A and the base station 106A, the MN 104A may determine to perform the conditional SN Addition procedure in response to a request received from the base station 106A or in response to one or more measurement results received from the UE 102 or obtained by the MN 104A from measurements on signals received from the UE 102. In contrast to the immediate SN Addition case discussed above, the UE 102 does not immediately attempt to connect to the C-SN 106B. In this scenario, the base station 104A again operates as an MN, but the base station 106B initially operates as a C-SN rather than an SN.

More particularly, when the UE 102 receives a configuration for the C-SN 106B, the UE 102 does not connect to the C-SN 106B until the UE 102 has determined that a certain condition is satisfied (the UE 102 in some cases can consider multiple conditions, but for convenience only the discussion below refers to a single condition). When the UE 102 determines that the condition has been satisfied, the UE 102 connects to the C-SN 106B, so that the C-SN 106B begins to operate as the SN 106B for the UE 102. Thus, while the base station 106B operates as a C-SN rather than an SN, the base station 106B is not yet connected to the UE 102, and accordingly is not yet servicing the UE 102. In some implementations, the UE 102 may disconnect from the SN 106A to connect to the C-SN 106B.

In yet other scenarios, the UE 102 is in DC with the MN 104A (via a PCell) and SN 106A (via a PSCell other than cell 126A and not shown in Fig. 1A). The SN 106A can perform conditional PSCell addition or change (CPAC) to configure a candidate PSCell (C-PSCell) 126A for the UE 102. If the UE 102 is configured a signaling radio bearer (SRB) (*e.g.,* SRB3) to exchange RRC messages with the SN 106A, the SN 106A may transmit a configuration for the C-PSCell 126A to the UE 102 via the SRB, *e.g.,* in response to one or more measurement results which may be received from the UE 102 via the SRB or via the MN 104A or may be obtained by the SN 106A from measurements on signals received from the UE 102. In case of via the MN 104A, the MN 104A receives the configuration for the C-PSCell 126A. In contrast to the immediate PSCell change case discussed above, the UE 102 does not immediately disconnect from the PSCell and attempt to connect to the C-PSCell 126A.

More particularly, when the UE 102 receives a configuration for the C-PSCell 126A, the UE 102 does not connect to the C-PSCell 126A until the UE 102 has determined that a certain condition is satisfied (the UE 102 in some cases can consider multiple conditions, but for convenience only the discussion below refers to a single condition). When the UE 102 determines that the condition has been satisfied, the UE 102 connects to the C-PSCell 126A, so that the C-PSCell 126A begins to operate as the PSCell 126A for the UE 102. Thus, while the cell 126A operates as a C-PSCell rather than a PSCell, the SN 106A may not yet connect to the UE 102 via the cell 126A. In some implementations, the UE 102 may disconnect from the PSCell to connect to the C-PSCell 126A.

In some scenarios, the condition associated with CSAC or CPAC can be signal strength/quality, which the UE 102 detects on the C-PSCell 126A of the SN 106A or on a C-PSCell 126B of C-SN 106B, exceeding a certain threshold or otherwise corresponding to an acceptable measurement. For example, when the one or more measurement results the UE 102 obtains on the C-PSCell 126A are above a threshold configured by the MN 104A or the SN 106A or above a pre-determined or pre-configured threshold, the UE 102 determines that the condition is satisfied. When the UE 102 determines that the signal strength/quality on the C-PSCell 126A of the SN 106A is sufficiently good (again, measured relative to one or more quantitative thresholds or other quantitative metrics), the UE 102 can perform a random access procedure on the C-PSCell 126A with the SN 106A to connect to the SN 106A. Once the UE 102 successfully completes the random access procedure on the C-PSCell 126A, the C-PSCell 126A becomes a PSCell 126A for the UE 102. The SN 106A then can start communicating data (user-plane data or control-plane data) with the UE 102 through the PSCell 126A. In another example, when the one or more measurement results the UE 102 obtains on the C-PSCell 126B are above a threshold configured by the MN 104A or the C-SN 106B or above a pre-determined or pre-configured threshold, the UE 102 determines that the condition is satisfied. When the UE 102 determines that the signal strength/quality on the C-PSCell 126B of the C-SN 106B is sufficiently good (again, measured relative to one or more quantitative thresholds or other quantitative metrics), the UE 102 can perform a random access procedure on the C-PSCell 126B with the C-SN 106B to connect to the C-SN 106B. Once the UE 102 successfully completes the random access procedure on the C-PSCell 126B, the C-PSCell 126B becomes a PSCell 126B for the UE 102 and the C-SN 106B becomes a SN 106B. The SN 106B then can start communicating data (user-plane data or control-plane data) with the UE 102 through the PSCell 126B.

In various configurations of the wireless communication system 100, the base station 104A can be implemented as a master eNB (MeNB) or a master gNB (MgNB), and the base station 106A or 106B can be implemented as a secondary gNB (SgNB) or a candidate SgNB (C-SgNB). The UE 102 can communicate with the base station 104A and the base station 106A or 106B (106A/B) via the same RAT such as EUTRA or NR, or different RATs. When the base station 104A is an MeNB and the base station 106A is an SgNB, the UE 102 can be in EUTRA-NR DC (EN-DC) with the MeNB and the SgNB. In this scenario, the MeNB 104A may or may not configure the base station 106B as a C-SgNB to the UE 102. In this scenario, the SgNB 106A may configure cell 126A as a C-PSCell to the UE 102. When the base station 104A is an MeNB and the base station 106A is a C-SgNB for the UE 102, the UE 102 can be in SC with the MeNB. In this scenario, the MeNB 104A may or may not configure the base station 106B as another C-SgNB to the UE 102.

In some cases, an MeNB, an SeNB or a C-SgNB is implemented as an ng-eNB rather than an eNB. When the base station 104A is a Master ng-eNB (Mng-eNB) and the base station 106A is a SgNB, the UE 102 can be in next generation (NG) EUTRA-NR DC (NGEN-DC) with the Mng-eNB and the SgNB. In this scenario, the MeNB 104A may or may not configure the base station 106B as a C-SgNB to the UE 102. In this scenario, the SgNB 106A may configure cell 126A as a C-PSCell to the UE 102. When the base station 104A is an Mng-NB and the base station 106A is a C-SgNB for the UE 102, the UE 102 can be in SC with the Mng-NB. In this scenario, the Mng-eNB 104A may or may not configure the base station 106B as another C-SgNB to the UE 102.

When the base station 104A is an MgNB and the base station 106A/B is an SgNB, the UE 102 may be in NR-NR DC (NR-DC) with the MgNB and the SgNB. In this scenario, the MeNB 104A may or may not configure the base station 106B as a C-SgNB to the UE 102. In this scenario, the SgNB 106A may configure cell 126A as a C-PSCell to the UE 102. When the base station 104A is an MgNB and the base station 106A is a C-SgNB for the UE 102, the UE 102 may be in SC with the MgNB. In this scenario, the MgNB 104A may or may not configure the base station 106B as another C-SgNB to the UE 102.

When the base station 104A is an MgNB and the base station 106A/B is a Secondary ng-eNB (Sng-eNB), the UE 102 may be in NR-EUTRA DC (NE-DC) with the MgNB and the Sng-eNB. In this scenario, the MgNB 104A may or may not configure the base station 106B as a C-Sng-eNB to the UE 102. In this scenario, the Sng-eNB 106A may configure cell 126A as a C-PSCell to the UE 102. When the base station 104A is an MgNB and the base station 106A is a candidate Sng-eNB (C-Sng-eNB) for the UE 102, the UE 102 may be in SC with the MgNB. In this scenario, the MgNB 104A may or may not configure the base station 106B as another C-Sng-eNB to the UE 102.

The base stations 104A, 106A, and 106B can connect to the same core network (CN) 110 which can be an evolved packet core (EPC) 111 or a fifth-generation core (5GC) 160. The base station 104A can be implemented as an eNB supporting an S1 interface for communicating with the EPC 111, an ng-eNB supporting an NG interface for communicating with the 5GC 160, or as a base station that supports the NR radio interface as well as an NG interface for communicating with the 5GC 160. The base station 106A can be implemented as an EN-DC gNB (en-gNB) with an S1 interface to the EPC 111, an en-gNB that does not connect to the EPC 111, a gNB that supports the NR radio interface as well as an NG interface to the 5GC 160, or a ng-eNB that supports an EUTRA radio interface as well as an NG interface to the 5GC 160. To directly exchange messages during the scenarios discussed below, the base stations 104A, 106A, and 106B can support an X2 or Xn interface.

As illustrated in Fig. 1B, the base station 104A supports a cell 124A, the base station 104B supports a cell 124B, the base station 106A supports a cell 126A, and the base station 106B supports a cell 126B. The cells 124A and 126A can partially overlap, as can the cells 124A and 124B, so that the UE 102 can communicate in DC with the base station 104A (operating as an MN) and the base station 106A (operating as an SN) and, upon completing an SN change, with the base station 104A (operating as MN) and the SN 104B. More particularly, when the UE 102 is in DC with the base station 104A and the base station 106A, the base station 104A operates as an MeNB, a Mng-eNB or a MgNB, and the base station 106A operates as an SgNB or a Sng-eNB. The cells 124A and 126B can partially overlap. When the UE 102 is in SC with the base station 104A, the base station 104A operates as an MeNB, a Mng-eNB or a MgNB, and the base station 106B operates as a C-SgNB or a C-Sng-eNB. When the UE 102 is in DC with the base station 104A and the base station 106A, the base station 104A operates as an MeNB, a Mng-eNB or a MgNB, the base station 106A operates as an SgNB or a Sng-eNB, and the base station 106B operates as a C-SgNB or a C-Sng-eNB.

In general, the wireless communication network 100 can include any suitable number of base stations supporting NR cells and/or EUTRA cells. More particularly, the EPC 111 or the 5GC 160 can be connected to any suitable number of base stations supporting NR cells and/or EUTRA cells. Although the examples below refer specifically to specific CN types (EPC, 5GC) and RAT types (5G NR and EUTRA), in general the techniques of this disclosure also can apply to other suitable radio access and/or core network technologies such as sixth generation (6G) radio access and/or 6G core network or 5G NR-6G DC.

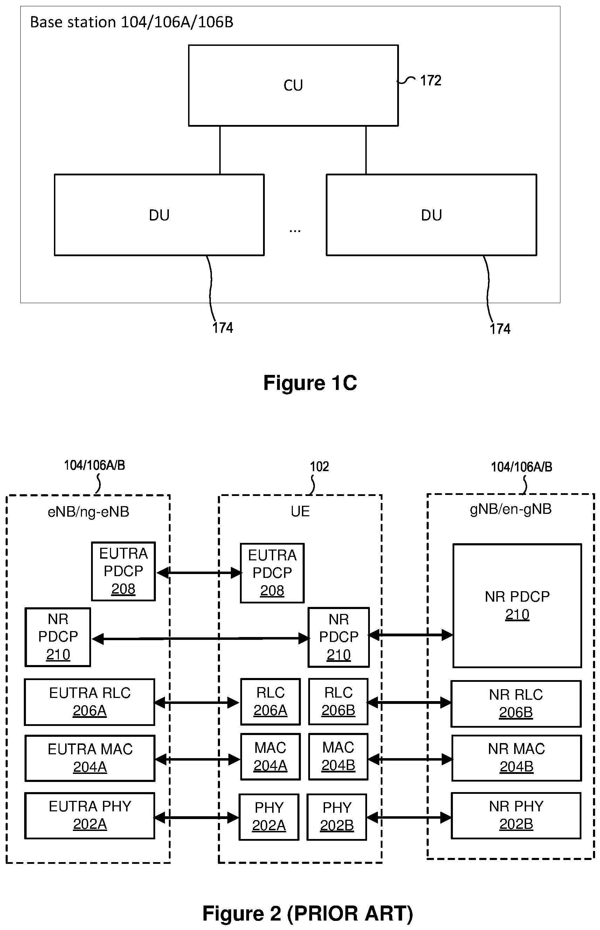

Fig. 1C depicts an example distributed implementation of a base station such as the base station 104A, 104B, 106A, or 106B. The base station in this implementation can include a centralized unit (CU) 172 and one or more distributed units (DUs) 174. The CU 172 is equipped with processing hardware that can include one or more general-purpose processors such as CPUs and non-transitory computer-readable memory storing machine-readable instructions executable on the one or more general-purpose processors, and/or special-purpose processing units. In one example, the CU 172 is equipped with the processing hardware 130. In another example, the CU 172 is equipped with the processing hardware 140. The processing hardware 140 in an example implementation includes an (C-)SN RRC controller 142 configured to manage or control one or more RRC configurations and/or RRC procedures when the base station 106A operates as an SN or a candidate SN (C-SN). The base station 106B can have hardware same as or similar to the base station 106A. The DU 174 is also equipped with processing hardware that can include one or more general-purpose processors such as CPUs and non-transitory computer-readable memory storing machine-readable instructions executable on the one or more general-purpose processors, and/or special-purpose processing units. In some examples, the processing hardware in an example implementation includes a medium access control (MAC) controller configured to manage or control one or more MAC operations or procedures (*e.g.,* a random access procedure) and a radio link control (RLC) controller configured to manage or control one or more RLC operations or procedures when the base station 106A operates as a MN, an SN or a candidate SN (C-SN). The process hardware may include further a physical layer controller configured to manage or control one or more physical layer operations or procedures.

Fig. 2 illustrates, in a simplified manner, an example radio protocol stack 200 according to which the UE 102 may communicate with an eNB/ng-eNB or a gNB (*e.g.,* one or more of the base stations 104A, 104B, 106A, 106B). In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to the EUTRA PDCP sublayer 208 and, in some cases, to the NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides RLC channels to the NR PDCP sublayer 210. The UE 102, in some implementations, supports both the EUTRA and the NR stack as shown in Fig. 2, to support handover between EUTRA and NR base stations and/or to support DC over EUTRA and NR interfaces. Further, as illustrated in Fig. 2, the UE 102 can support layering of NR PDCP sublayer 210 over the EUTRA RLC sublayer 206A.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (*e.g.,* to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide SRBs to exchange RRC messages, for example. On a user plane, the EUTRA PDCP sublayer 208 and the NR PDCP sublayer 210 can provide DRBs to support data exchange.

In scenarios where the UE 102 operates in EUTRA/NR DC (EN-DC), with the base station 104A operating as an MeNB and the base station 106A operating as an SgNB, the wireless communication system 100 can provide the UE 102 with an MN-terminated bearer that uses the EUTRA PDCP sublayer 208, or an MN-terminated bearer that uses the NR PDCP sublayer 210. The wireless communication system 100 in various scenarios can also provide the UE 102 with an SN-terminated bearer, which uses only the NR PDCP sublayer 210. The MN-terminated bearer can be an MCG bearer or a split bearer. The SN-terminated bearer can be an SCG bearer or a split bearer. The MN-terminated bearer can be an SRB (e.g., SRB1 or SRB2) or a DRB. The SN-terminated bearer can an SRB or a DRB.

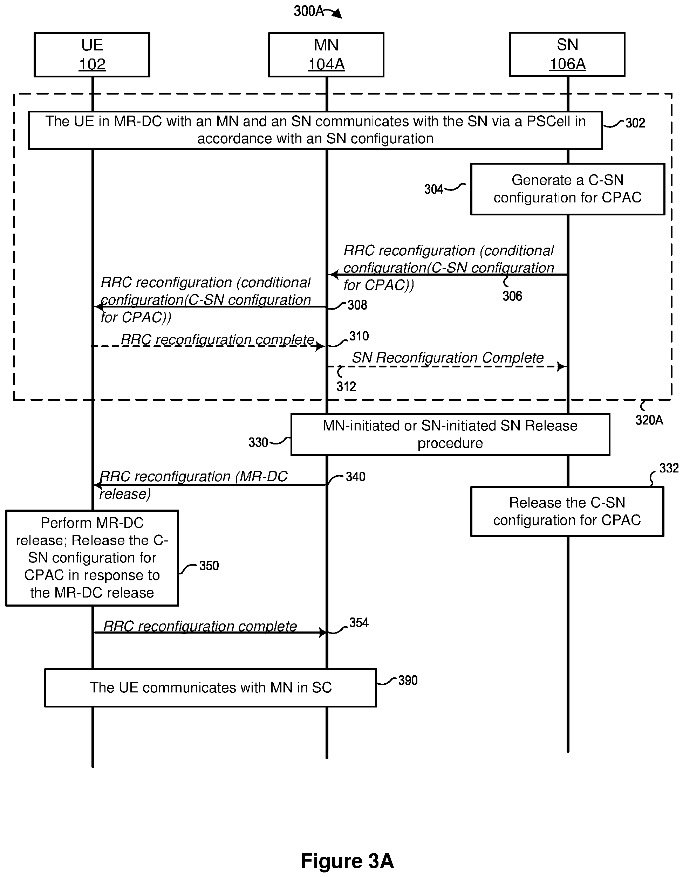

Next, several example scenarios in which a UE and/or a base station manage conditional configuration for a conditional procedure are discussed with reference to Figs. 3A-7.

Referring first to Fig. 3A, the base station 104A in a scenario 300A operates 302 as an MN, and the base station 106A operates as an SN. Initially, the UE 102 is in MR-DC with the MN 104A and the SN 106A. The UE 102 communicates 302 UL PDUs and/or DL PDUs with SN 106A via a PSCell (*i.e.,* a cell other than cell 126A) in accordance with a certain SN configuration. The SN 106A then determines 304 that it should generate a C-SN configuration for conditional PSCell addition or change (CPAC). The SN 106A can make this determination based on one or more measurement results received from the UE 102 via the MN 104A, from the UE directly (*e.g.,* via a signaling radio bearer (SRB) established between the UE 102 and the SN 106A or via a physical control channel), or obtained by the SN 106A from measurements on signals, control channels, or data channels received from the UE 102, for example, or another suitable event. In response to this determination, the SN 106A generates 304 a conditional configuration including a C-SN configuration and generates an RRC reconfiguration including the conditional configuration.

In the example scenario 300A, the MN 104A then transmits 306 the RRC reconfiguration message to the MN 104A. The MN 104A in turn transmits 308 the RRC reconfiguration message including the conditional configuration to the UE 102. In some implementations, the UE 102 may transmit 310 an RRC reconfiguration complete message to the MN 104A in response to the RRC reconfiguration message. The MN 104A may transmit 312 a *SN Reconfiguration Complete* message to the SN 106A in response to the RRC reconfiguration complete message.

To transmit 308 the RRC reconfiguration message, the MN 104A in one implementation transmits an RRC container message including the RRC reconfiguration to the UE 102. To transmit 310 the RRC reconfiguration complete message, the UE 102 in one implementation transmits an RRC container response message including the RRC reconfiguration complete message to the MN 104A. The MN 104A may send 312 the *SN Reconfiguration Complete* message to the SN 106A in response to the RRC container response message. In turn, the MN 104A may include the RRC reconfiguration complete message in the 312 *SN Reconfiguration Complete* message. The events 304-312 collectively can define a CPAC configuration procedure 320A.

When the SN 106A is implemented as an ng-eNB, the RRC reconfiguration message in the events 306 and 308 is an *RRCConnectionReconfiguration* message, and the RRC reconfiguration complete message in the event 310 is *RRCConnectionReconfigurationComplete.* When the SN 106A is implemented as a gNB, the RRC reconfiguration message in the events 306 and 308 is an *RRCReconfiguration* message, and the RRC reconfiguration complete message in the event 310 is an *RRCReconfigurationComplete* message.

At a later time, the MN 104A and the SN 106A may perform 330 an SN Release procedure, which can be MN-initiated or a SN-initiated. The SN 106A releases 332 the C-SN configuration for CPAC in response to the MN-initiated or SN-initiated SN Release procedure. The MN 104A generates an RRC reconfiguration message indicating MR-DC release in response to determining the MN-initiated SN Release procedure or in response to the MN-initiated or SN-initiated SN Release procedure, and transmits 340 the RRC reconfiguration message to the UE 102. In various implementations, the MN 104A may transmit 340 the RRC reconfiguration message before, during or after performing 330 the SN Release procedure.

When the MN 104A determines that it should perform 330 the SN Release procedure (as an MN-initiated SN Release procedure), the MN 104A transmits an *SN Release Request* message to the SN 106A, and the SN 106A transmits an *SN Release Request Acknowledge* message to the MN 104A in response to the *SN Release Request* message. To reduce confusion, neither message is shown in FIG. 3A. The SN 106A then releases 332 the C-SN configuration for CPAC in response to the *SN Release Request* message. The MN 104A can determine that it should perform the SN Release procedure in response to one or more measurement results, which the MN 104A can receive from the UE 102 or obtain from measurements on signals received from the UE 102. In some implementations, the MN 104A transmits 340 the RRC reconfiguration message before or after transmitting the *SN Release Request* message or receiving the *SN Release Request Acknowledge* message.

The SN 106A can perform 330 the SN Release procedure (as an SN-initiated SN Release procedure) by sending an *SN Release Required* message to the MN 104A. The MN 104A supports the SN-initiated SN Release procedure by sending an *SN Release Confirm* message to the SN 106A in response to the *SN Release Required* message. To reduce confusion, neither message is shown in FIG. 3A. The SN 106A can determine that it should perform the SN Release procedure in response to one or more measurement results the SN 106A receives from the UE 102 or which the MN 104A obtains from measurements on signals received from the UE 102. The SN 106A releases 332 the C-SN configuration for CPAC in response to this determination, the *SN Release Required* message, or the *SN Release Confirm* message. In some implementations, the MN 104A generates the RRC reconfiguration 340 in response to the *SN Release Required* message. The MN 104A can transmit 340 the RRC reconfiguration message after receiving the *SN Release Required* message or transmitting the *SN Release Confirm* message.

The UE 102 performs 350 the MR-DC release in response to receiving 340 the RRC reconfiguration message. The UE 102 also releases 350 the C-SN configuration for CPAC in response to receiving 340 the MR-DC release indication or the RRC reconfiguration message. The UE 102 transmits 354 an RRC reconfiguration complete message to the MN 104A in response to receiving 340 the RRC reconfiguration message. The UE then operates 390 in single connectivity (SC) with the MN 104A. Thus, the UE 102 disconnects from the SN 106A in response to performing 350 the MR-DC release procedure.

In this implementation, the RRC reconfiguration message the MN 104A transmits 340 does not include a field, an information element (IE), a certain value of another field, or another type of element that explicitly instructs the UE 102 to release the C-SN configuration or, more generally, the conditional configuration. Rather, the UE 102 in this implementation determines that it should release the conditional configuration as a part of performing 350 an MR-DC release procedure, in response to determining that the RAN is releasing MR-DC.

When the SN 106A is implemented as an eNB or an ng-eNB, the RRC reconfiguration message in the event 340 is an *RRCConnectionReconfiguration* message, and the RRC reconfiguration complete message in the event 354 is an *RRCConnectionReconfigurationComplete* message. The MN 104A can include an MR-DC release indicator (e.g., "release" in an *nr-Config-r15* field) in the *RRCConnectionReconfiguration* message to indicate the MR-DC release. When the SN 106A is implemented as a gNB, the RRC reconfiguration message in the event 340 is an *RRCReconfiguration* message, and the RRC reconfiguration complete message in the event 354 is an *RRCReconfigurationComplete* message. The MN 104A similarly may include an MR-DC release indicator (e.g., "release" in a *mrdc-SecondaryCellGroupConfig* field) in the *RRCReconfiguration* message to indicate the MR-DC release.

To perform 350 the MR-DC release, the UE 102 releases an SRB3 as well as measurement configuration(s) (e.g., *measConfig*) and the SN configuration with which the SN 106A previously configured the UE 102.

With continued reference to Fig. 3A, the C-SN configuration in some implementations can be a complete and self-contained configuration (*i.e*., a full configuration). The C-SN configuration may include a full configuration indication (an information element (IE) or a field) that identifies the C-SN configuration as a full configuration. The UE 102 in this case can directly use the C-SN configuration to communicate with the SN 106A without relying on a prior SN configuration. On the other hand, the C-SN configuration in other cases can include a "delta" configuration, or one or more configurations that augment a previously received SN configuration. The UE 102 in this case can use the delta C-SN configuration together with the prior SN configuration to communicate with the SN 106A.

The C-SN configuration can include multiple configuration parameters for the UE 102 to apply when communicating with the SN 106A via a C-PSCell 126A. The multiple configuration parameters may configure radio resources for the UE 102 to communicate with the SN 106A via the C-PSCell 126A and zero, one, or more candidate secondary cells (C-SCells) of the SN 106A. The multiple configuration parameters may configure zero, one, or more radio bearers. The one or more radio bearers can include an SRB and/or one or more DRBs.

The SN configuration can include multiple configuration parameters for the UE 102 to communicate with the SN 106A via the PSCell and zero, one, or more secondary cells (SCells) of the SN 106A. The multiple configuration parameters may configure radio resources for the UE 102 to communicate with the SN 106A via the PSCell and zero, one, or more SCells of the SN 106A. The multiple configuration parameters may configure zero, one, or more radio bearers. The one or more radio bearers can include an SRB and/or one or more DRBs.

In some implementations, the SN 106A can include the RRC reconfiguration message in a *SN Modification Acknowledge* message responding to a *SN Modification Request* message received from the MN 104A and send the *SN Modification Request Acknowledge* message to the MN 104A during the event 306. In other implementations, the SN 106A can include the RRC reconfiguration message in an *SN Modification Required* message and send the *SN Modification Required* message to the MN 104A during the event 306. The SN 106A may indicate that the *SN Modification Request Acknowledge* message or the *SN Modification Required* message is for conditional PSCell addition or change (CPAC), so that the MN 104A can determine that the *SN Modification Request Acknowledge* message or the *SN Modification Required* message includes a conditional configuration for CPAC. In other implementations, the SN 106A does not indicate CPAC in the *SN Modification Request Acknowledge* message or the *SN Modification Required* message, so that the CPAC configuration from the SN 106A is transparent to the MN 104A (in other words, so that the MN 104A simply tunnels the CPAC configuration through to the UE 102, without processing the CPAC configuration).

When transmitting 306 the RRC reconfiguration to the MN 104A, the SN 106A can specify a condition that must be satisfied before the UE 102 applies the C-SN configuration for CPAC. The SN 106A can specify this condition at the level of the RRC reconfiguration message, at the level of the conditional configuration element, or at the level of the C-SN configuration for CPAC. To perform 350 the MR-DC release, the UE 102 releases the condition.

In some implementations, the C-SN configuration can include a group configuration (*CellGroupConfig*) IE that configures the C-PSCell 126A and zero, one, or more C-SCells of the SN 106A. In one implementation, the C-SN configuration may include a radio bearer configuration. In another implementation, the C-SN configuration may not include a radio bearer configuration. For example, the radio bearer configuration can be a *RadioBearerConfig* IE, *DRB-ToAddModList* IE or *SRB-ToAddModList* IE, *DRB-ToAddMod* IE or *SRB-ToAddMod* IE. In various implementations, the C-SN configuration can be an *RRCReconfiguration* message, *RRCReconfiguration-IEs,* or the *CellGroupConfig* IE conforming to 3GPP TS 38.331. The full configuration indication may be a field or an IE conforming to 3GPP TS 38.331. In other implementations, the C-SN configuration can include an *SCG-ConfigPartSCG-r12* IE that configures the C-PSCell 126A and zero, one, or more C-SCells of the SN 106A. In some implementations, the C-SN configuration is an *RRCConnectionReconfiguration* message, *RRCConnectionReconfiguration-IEs,* or the *ConfigPartSCG-r12* IE conforming to 3GPP TS 36.331. The full configuration indication may be a field or an IE conforming to 3GPP TS 36.331.

In some implementations, the SN configuration can include a *CellGroupConfig* IE that configures the PSCell and may configure zero, one, or more SCells of the SN 106A. In one implementation, the SN configuration can be a *RRCReconfiguration* message, *RRCReconfiguration-IEs* or the *CellGroupConfig* IE conforming to 3GPP TS 38.331. In other implementations, the SN configuration can include a *SCG-ConfigPartSCG-r12* IE that configures the PSCell and may configure zero, one, or more SCells of the SN 106A. In one implementation, the SN configuration can be a *RRCConnectionReconfiguration* message, *RRCConnectionReconfiguration-IEs* or the *ConfigPartSCG-r12* IE conforming to 3GPP TS 36.331.

In some cases, the UE 102 may receive one or more conditions (discussed in this disclosure in singular for convenience) in the RRC reconfiguration message, the conditional configuration element, or the C-SN configuration during the event 308. The UE 102 may use the one or more conditions to determine whether to connect to the C-PSCell 126A. If the UE 102 does not perform 350 the MR-DC release (for example, if the UE 102 does not receive 340 the RRC reconfiguration), and the UE 102 determines that the condition is satisfied, the UE 102 connects to the C-PSCell 126A. That is, the condition (or "triggering condition") triggers the UE 102 to connect to the C-PSCell 126A or to execute the C-SN configuration. The UE 102 can perform a random access procedure with the SN 106A via the C-PSCell 126A using a random access configuration in the C-SN configuration to connect to the C-PSCell 126A. The UE 102 can disconnect from the PSCell to connect to the C-PSCell 126A. However, if the UE 102 does not determine that the condition is satisfied, the UE 102 does not connect to the C-PSCell 126A.

Still referring to Fig. 3A, the SN 106A in some cases can include the CU 172 and one or more DU 174 as illustrated in Fig. 1C. The DU 174 may generate the C-SN configuration or part of the C-SN configuration and send the C-SN configuration or part of the C-SN configuration to the CU 172. In cases where the DU 174 generates a portion of the C-SN configuration, the CU 172 may also generate the rest of the C-SN configuration.

When the MN 104A is implemented as a gNB, the RRC container message can be an *RRCReconfiguration* message, and the RRC container response message can be an *RRCReconfigurationComplete* message. When the MN 104A is implemented as an eNB or ng-eNB, the RRC container message can be an *RRCConnectionReconfiguration* message, and the RRC container response message can be an *RRCConnectionReconfigurationComplete* message. In yet other implementations, the RRC container message can be a *DLInformationTransfer* message or a *DLInformationTransferMRDC* message.

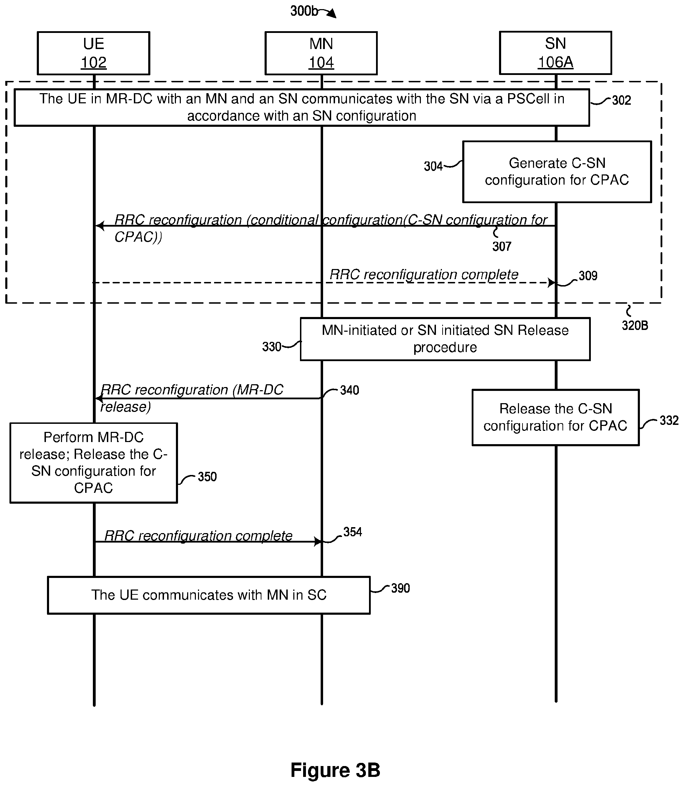

Now referring to Fig. 3B, a scenario 300B involves a CPAC without SN change, *i.e.,* a conditional change of a PSCell of an SN when the UE is already in DC with the MN and SN. In this scenario, the base station 104A operates as a MN and the base station 106A operates as a SN. Events in this scenario similar to those discussed above are labeled with same references numbers. The differences between the scenarios of Fig. 3A and Fig. 3B are discussed below.

The CPAC configuration procedure 320B is generally similar to the CPAC configuration procedure 320A of Fig. 3A. However, in the scenario 300B the SN 106A directly transmits 307 the RRC reconfiguration message including the conditional configuration to the UE 102, rather that transmitting the RRC reconfiguration message to the UE 102 via the MN 104A, as the SN 106A does in the scenario 300A of Fig. 3A. In some implementations, the SN 106A configures a first SRB to the UE 102 via the MN 104A and transmits the RRC reconfiguration message via the first SRB to the UE 102. For example, the SN 106A transmits an SRB configuration configuring the first SRB (e.g., SRB3) to the MN 104A, and the MN 104A transmits the SRB configuration to the UE via a second SRB (e.g., SRB1) between the MN 104A and the UE 102. In some implementations, the UE 102 can transmit 309 an RRC reconfiguration complete message via the first SRB to the SN 106A in response to the RRC reconfiguration message, rather than transmitting 310 the RRC reconfiguration complete message to the MN 104A as in the scenario 300A.

When the SN 106A is implemented as an ng-eNB, the RRC reconfiguration message in the event 307 is a *RRCConnectionReconfiguration* message, and the RRC reconfiguration complete message in the event 309 is a *RRCConnectionReconfigurationComplete* message. When the SN 106A is an gNB, the RRC reconfiguration message in the event 307 is a *RRCReconfiguration* message, and the RRC reconfiguration complete message in the event 309 is an *RRCReconfigurationComplete* message.

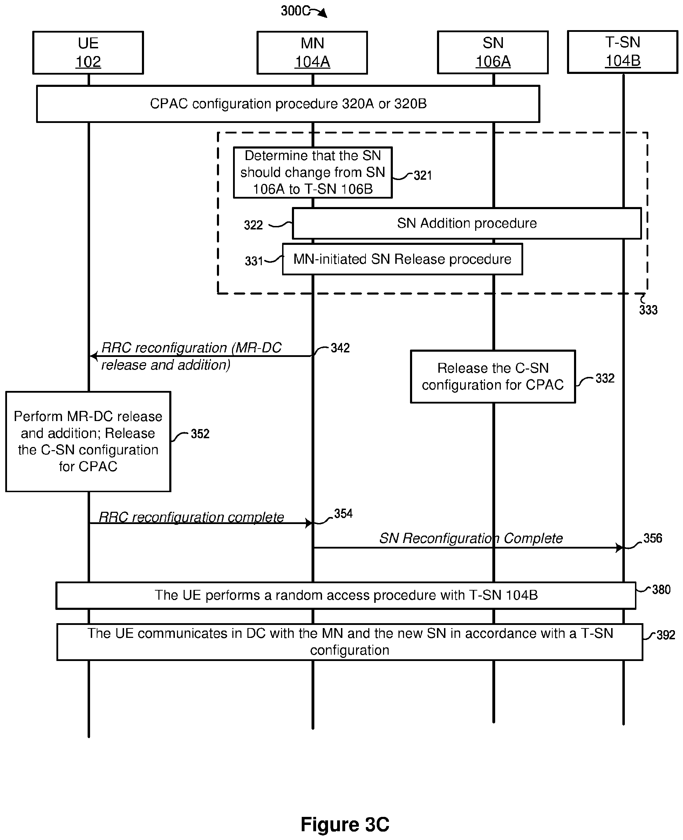

Next, Fig. 3C illustrates a scenario 300C that involves an immediate SN change and a CPAC without SN change. In this scenario, the base station 104A operates as an MN, the base station 106A operates as an SN, and the base station 104B operates as a target SN (T-SN). Events in this scenario similar to those discussed above are labeled with same references numbers. Some of the differences between the scenarios of Fig. 3A and Fig. 3C are discussed below.

At the beginning of the scenario 300C, the UE 102 operates in MR-DC with the MN 104A and 106B, and the MN 104A and the SN 106A perform the CPAC configuration procedure 320A or 320B (discussed above with reference to Figs. 3A and 3B). The MN 104A then determines 321 that the SN should change from the SN 106A to SN 106B. In other words, the MN 104A determines that the UE 102 and the RAN should perform an immediate SN change. In response to this determination, the MN 104A performs 322 an SN Addition procedure. The MN 104A then can initiate 331 an SN Release procedure, which can be similar to the MN-initiated variant of the procedure 330 discussed with reference to Figs. 3A and 3B.

When performing 322 the SN Addition procedure, the MN 104A sends a *SN Addition Request* message to the T-SN 106B to request or configure the T-SN 106B as an SN for the UE 102. In response to the *SN Addition Request* message, the T-SN 106B sends a *SN Addition Request Acknowledge* message to the MN 104A. Further, when performing 322 the SN Addition procedure, the MN 104A receives a new SN configuration (i.e., T-SN configuration) in the *SN Addition Request Acknowledge* message. The MN 104A may receive a radio bearer configuration (e.g, *RadioBearerConfig* IE, *DRB-ToAddModList* IE or *SRB-ToAddModList* IE, *DRB-ToAddMod* IE or *SRB-ToAddMod* IE) in the *SN Addition Request Acknowledge* message. In some implementations, the data structure of the T-SN configuration may be similar to the data structure of the SN configuration. The T-SN configuration however may have one or more configurations with different values from the SN-configuration. The events 321, 322, and 331 collectively can define an MN-initiated SN Change Procedure 333.

With continued reference to Fig. 3C, upon completing 322 the SN Addition procedure, the MN 104A generates an RRC reconfiguration message indicating MR-DC release and addition and transmits 342 the RRC reconfiguration message to the UE 102. In some implementations, the MN 104A transmits 342 the RRC reconfiguration message after receiving the *SN Addition Request Acknowledge* message. The MN 104A can include the T-SN configuration in the RRC configuration message. The MN 104A can include the radio bearer configuration in the RRC reconfiguration message if the MN 104A receives the radio bearer configuration.

Similar to the scenarios of Figs. 3A and 3B, the MN 104A does not include, in the RRC reconfiguration message in the event 342, an indicator that explicitly instructs the UE 102 to release the conditional configuration. When the MN 104A is implemented as an eNB or an ng-eNB, the RRC reconfiguration message in the event 342 is *RRCConnectionReconfiguration* message, the RRC reconfiguration complete message 354 is *RRCConnectionReconfigurationComplete.* The MN 104A may include a release and addition field (e.g., "endc-ReleaseAndAdd-r15" in a *nr-Config-r15* field) in the *RRCConnectionReconfiguration* message to indicate the MR-DC release and addition. If the MN 104A is an gNB, the RRC reconfiguration message in the event 342 is *RRCReconfiguration,* and the RRC reconfiguration complete message 354 is *RRCReconfigurationComplete.* The MN 104A can include a release and addition field (e.g., *"mrdc-ReleaseAndAdd"* in a *mrdc-SecondaryCellGroupConfig* field) in the *RRCReconfiguration* message to indicate the MR-DC release and addition.

The UE 102 performs 352 MR-DC release and addition in response to the MR-DC release and addition indication in the RRC reconfiguration message. The UE 102 transmits 354 an RRC reconfiguration complete message to the MN 104A in response to the RRC reconfiguration message, and the MN 104A sends 356 an *SN Reconfiguration Complete* message to the T-SN 104B in response to the RRC reconfiguration complete message. The UE 102 performs 380 a random access procedure with the T-SN 104B on a target PSCell 124B according to one or more random access configurations in the T-SN configuration or RRC reconfiguration message. In some implementations, the random access procedure can be a four-step random access procedure or a two-step random access procedure. In other implementations, the random access procedure can be a contention-based random access procedure or a contention-free random access procedure. If the UE successfully completes the random access procedure on the target PSCell 124B, the target PSCell 124B becomes the PSCell 124B, and the T-SN 104B becomes the SN 104B for the purposes of a DC session at the UE 102. The UE 102 then operates 392 in DC with the MN 104A and the SN 104B, and communicates with the SN 104B in accordance with the T-SN configuration. In some implementations, the UE 102 can disconnect from the SN 106A in order to perform the random access procedure on the target PSCell 124B. In other implementations, the UE 102 may still connect to the SN 106A while performing the random access procedure on the target PSCell 124B.

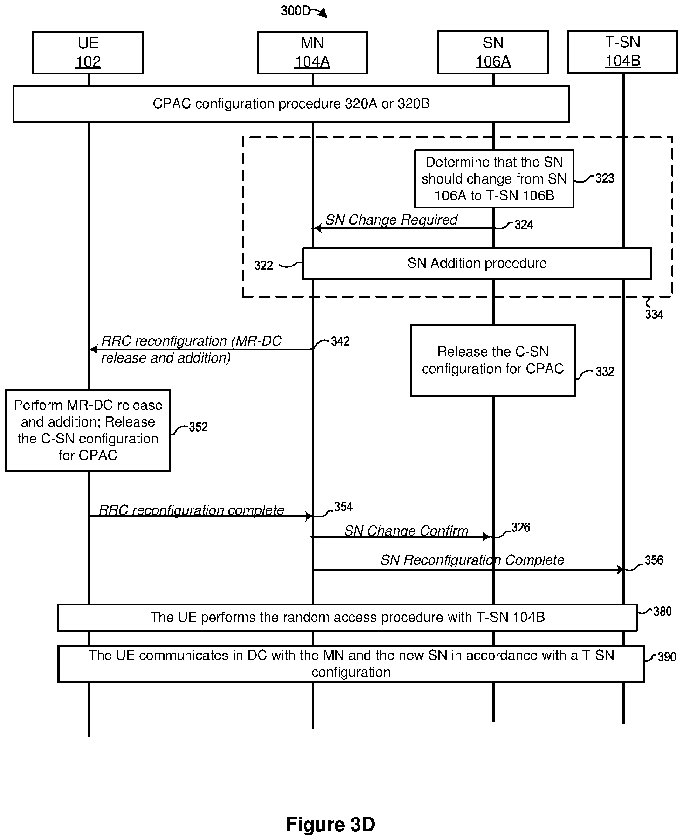

Next, Fig. 3D illustrates another scenario 300D that involves an immediate SN change and a CPAC without SN change. In this scenario, the base station 104A operates as an MN, the base station 106A operates as an SN, and the base station 104B operates a target SN (T-SN). Events in this scenario similar to those discussed above are labeled with same references numbers. The differences between the scenarios of Fig. 3A, Fig. 3C and Fig. 3D are discussed below.

At the beginning of the scenario 300D, the UE 102, the MN 104A and the SN 106A perform a CPAC configuration procedure 320A or 320B. The SN 106A then determines 323 that the SN should change SN 106A to SN 106B, i.e., perform an immediate SN change. In response to the determination, the SN 106A transmits 324 an *SN Change Required* message to the MN 104A. After receiving the *SN Change Required* message, the MN 104A performs 322 an SN Addition procedure with the T-SN 106B. During this procedure the MN 104A can send an *SN Addition Request* message to the T-SN 106B to request or configure the T-SN 106B as an SN for the UE 102, and the T-SN 106B can respond with an *SN Addition Request Acknowledge* message. The events 323, 324, and 322 collectively can define an SN-initiated SN Change Procedure 334. The MN 104A in this scenario transmits 326 an SN Change Confirm message to the SN 106A due to the SN-initiation of the SN addition Change Procedure 334. The MN 104A may send 326 the *SN Change Confirm* message in response to the event 354,before, after or while transmitting 356 the *SN Reconfiguration Complete* message to the T-SN 106B.

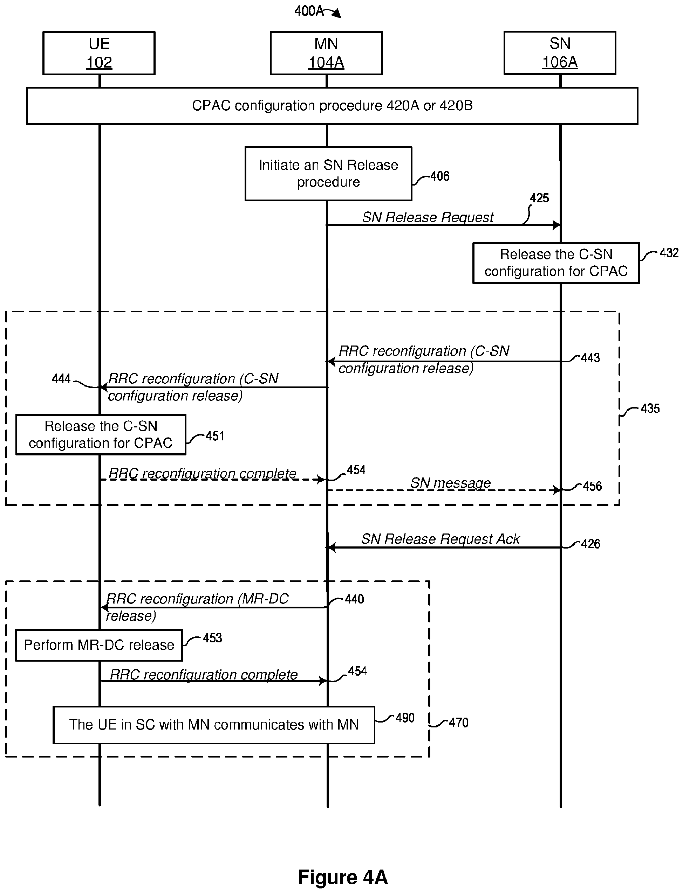

Now referring to Fig. 4A, a scenario 400A involves a CPAC without SN change, *i.e.,* a conditional change of a PSCell of an SN when the UE is already in DC with the MN and SN. In this scenario, the base station 104A operates as a MN and the base station 106A operates as a SN. The differences between Fig. 4A and Figs 3A-3B are described below.

At the beginning of scenario 400A, the UE 102, the MN 104A, and the SN 106A perform the CPAC configuration procedure 420A or 420B, which can be similar to the procedure 320A or 320B, respectively, discussed above with reference to Figs. 3A and 3B. The MN 104A then determines 406 that it should perform an MN-initiated SN Release procedure. The MN 104A accordingly transmits 425 an *SN Release Request* message to the SN 106A. In response to receiving 425 the *SN Release Request* message, the SN 106A releases 432 the C-SN configuration for CPAC.

Further, the SN 106A performs a procedure (prior to the event 432, concurrently with the event 432, or subsequently to the event 432) for instructing the UE 102 to release the CPAC configuration. In particular, the SN 106A in this scenario generates an RRC reconfiguration message including a C-SN configuration release indicator (which can be an IE, a dedicated field, a value of a field also used to convey other information, etc.) to instruct UE 102 to release the C-SN configuration for CPAC (more generally, a conditional configuration release indicator that explicitly instructs the UE 102 to release the conditional configuration). The SN 106A transmits 443 the RRC reconfiguration message to the MN 104A, and the MN 104A transmits 444 the RRC reconfiguration message to the UE 102. To transmit 444 the RRC reconfiguration message to the MN 104A, the SN 106A in some implementations includes the RRC reconfiguration message in an interface message (e.g., *SN Modification Required* message) and send the interface message to the MN 104A. To transmit the RRC reconfiguration message to the UE 102, the MN 104A in some implementations includes the RRC reconfiguration message in an RRC container message and transmit the RRC container message to the UE 102.

In response to receiving the C-SN configuration release indicator, the UE 102 releases 451 the C-SN configuration for CPAC. The UE 102 may transmit 454 an RRC reconfiguration complete message to the MN 104A in response to the RRC reconfiguration message. To transmit the RRC reconfiguration complete message to the MN 104A, the UE 102 in some implementations includes the RRC reconfiguration complete message in an RRC container response message and transmits the RRC container response message to the UE 102. Upon receiving the RRC reconfiguration complete message, the MN 104A may send 456 an SN message to the SN 106A. The SN message can be for example an *SN Modification Confirm* or an *SN Reconfiguration Complete* message. The SN 106A then may transmit 426 an *SN Release Request Acknowledge* message to the MN 10Aa, responsive to the *SN Release Request* message of the event 425. Events 443, 444, 451, 454, and 456 collectively define a CPAC configuration release procedure 435. The SN 106A can transmit 426 this *SN Release Request Acknowledge* message after transmitting 443 the RRC reconfiguration message or receiving 456 the SN message, depending on the implementation.

After receiving the 426 the *SN Release Request Acknowledge* message, the MN 104A generates an RRC reconfiguration message indicating MR-DC release and transmits 440 the RRC reconfiguration message to the UE 102. The UE 102 performs 453 MR-DC release and transmits 454 an RRC reconfiguration complete message to the MN 104, responsive to the RRC reconfiguration message of the event 440. Upon completing the MR-DC release, the UE 102 begins to operate 490 in SC with the MN 104A. Events 440, 453, 454, and 490 collectively can define an MR-DC release procedure 470.

In some implementations, the C-SN configuration release indicator includes a configuration identity or identifier (ID). The conditional configuration element in the RRC reconfiguration message of the event 306, 307, or 308 for example can include this configuration ID to identify the C-SN configuration for CPAC. The SN 106A also can include the configuration ID in the RRC reconfiguration message of the event 443 (and the event 444, after the MN 104 forwards the RRC reconfiguration message).

Thus, the UE 102 in this scenario releases 451 the C-SN configuration for CPAC and releases 453 MR-DC release separately, in response to different triggering events. In contrast, in the scenarios of Figs. 3A-D (see events 350 and 352), the UE 102 releases the C-SN configuration along with the MR-DC in response to the same triggering event.

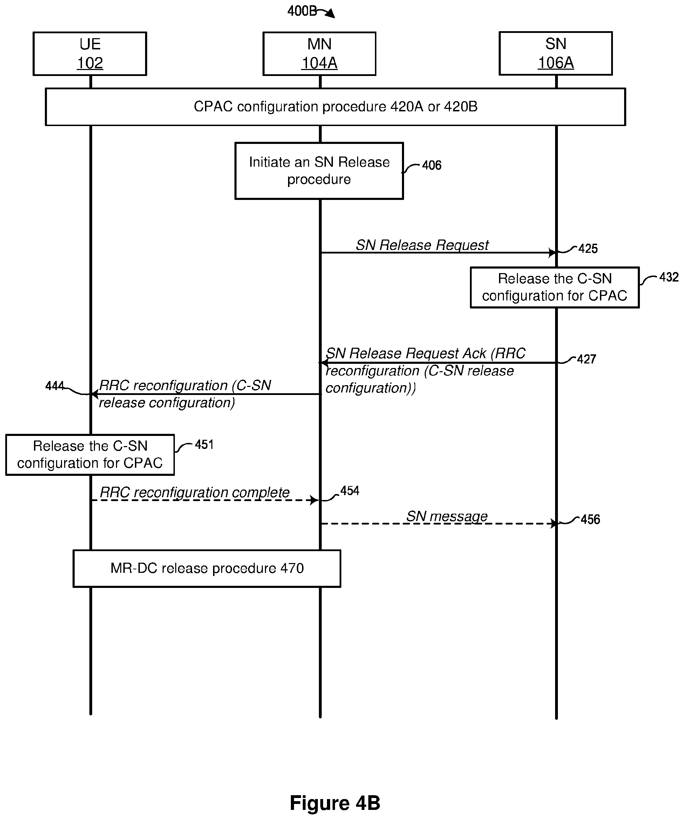

Next, a scenario 400B of Fig. 4B is generally similar to the scenario 400A, and events in this scenario similar to those discussed above are labeled with same references numbers. However, the SN 106A in this scenario transmits 427 an *SN Release Request Acknowledge* message, in response to receiving 425 an *SN Release Request* message, and includes an RRC reconfiguration message with a C-SN configuration release indicator in the *SN Release Request Acknowledge* message. Thus, rather than separately transmitting 443 an RRC reconfiguration message in an RRC container message, as in the scenario of Fig. 4A, the SN 106A provides the C-SN configuration release indicator in the message that acknowledges the request to release the SN.

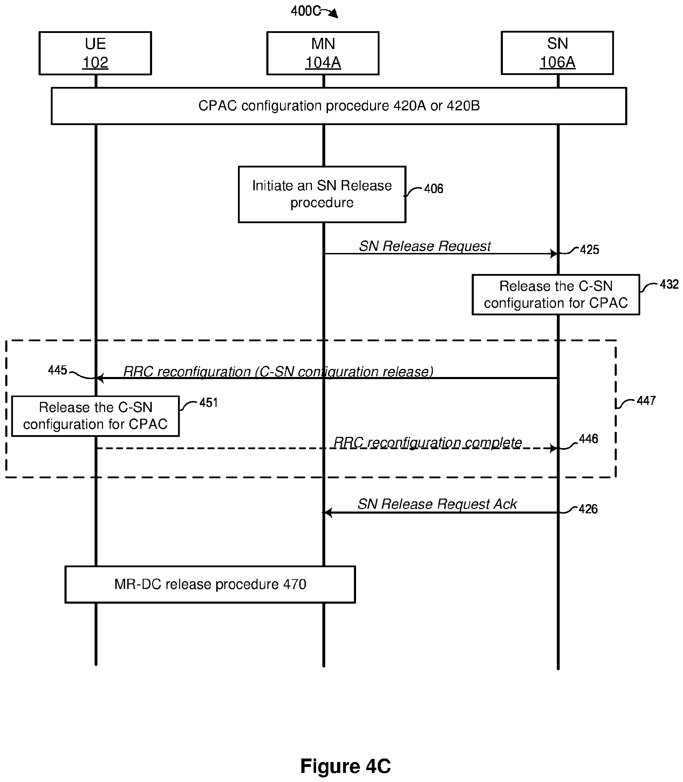

Now referring to Fig. 4C, a scenario 400C is generally similar to the scenario 400A, and events in this scenario similar to those discussed above are labeled with same references numbers. However, the SN 106A in this case transmits 445 an RRC reconfiguration to the UE 102 directly (e.g., on an SRB3), rather than via the MN 104A. The RRC reconfiguration includes a C-SN configuration release indicator, and the UE 102 releases 451 the C-SN configuration for CPAC in response to the RRC reconfiguration message from the SN 106A. The UE 102 may transmit 446 an RRC reconfiguration complete message to the SN 106A directly (e.g., on an SRB3), rather than via the MN 104A. Events 445, 451, and 446 collectively define a CPAC configuration release procedure 447.

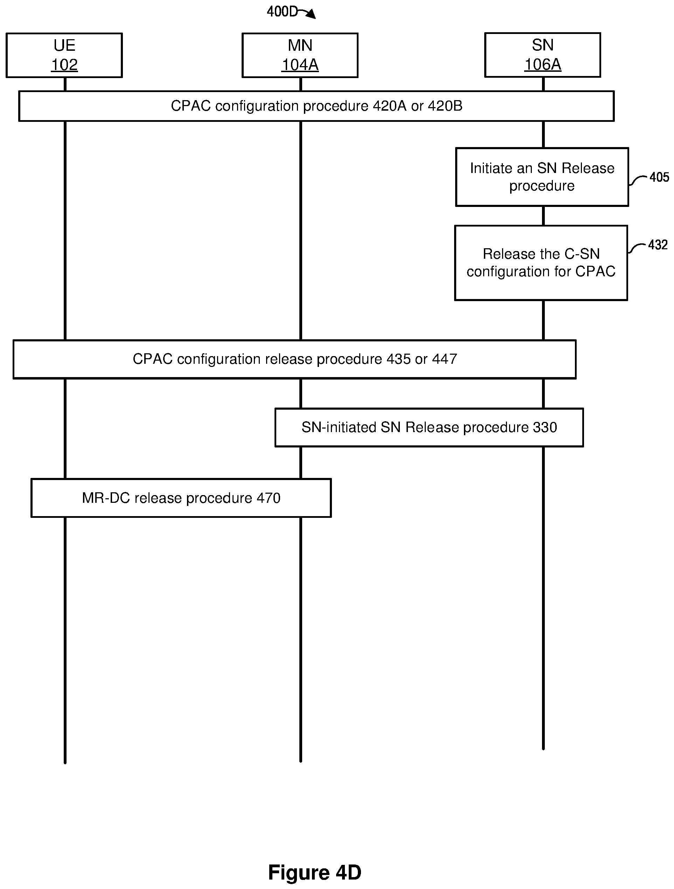

Fig. 4D illustrates an example scenario 400D in which the SN 106A determines 405 that it should release the SN configuration, releases 432 the C-SN configuration for CPAC, performs a CPAC configuration release procedure 435 or 447, then completes the SN-initiated SN release procedure 330, and performs the MR-DC release procedure 470.

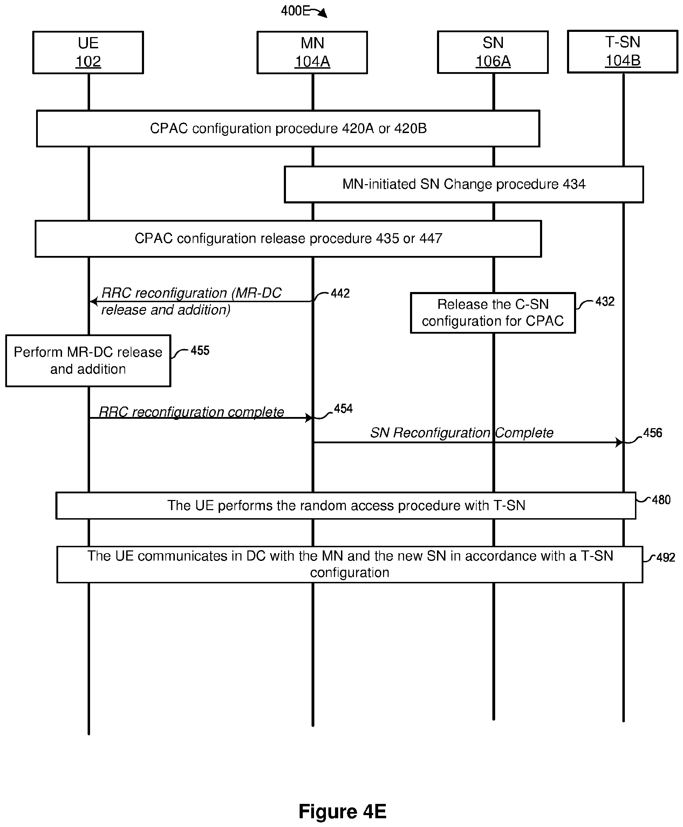

Now referring to Fig. 4E, events in a scenario 400E similar to those discussed above are labeled with same references numbers. Further, events 480 and 492 are similar to the events 380 and 392, respectively, discussed above. The differences between the scenarios above and the scenario 400E are considered next.

The SN 106A performs an SN-initiated SN Change Procedure 434, similar to the procedure 334 discussed above with reference to Fig. 3D. The UE 102, the MN 104A, and the SN 106A then perform the CPAC configuration release procedure 435, or the UE 102 and the SN 106A perform the CPAC configuration release procedure 447. After the MN 104A generates an RRC reconfiguration message indicating MR-DC release and addition and transmits 442 the RRC reconfiguration message to the UE 102, the UE 102 performs 455 MR-DC release and addition.

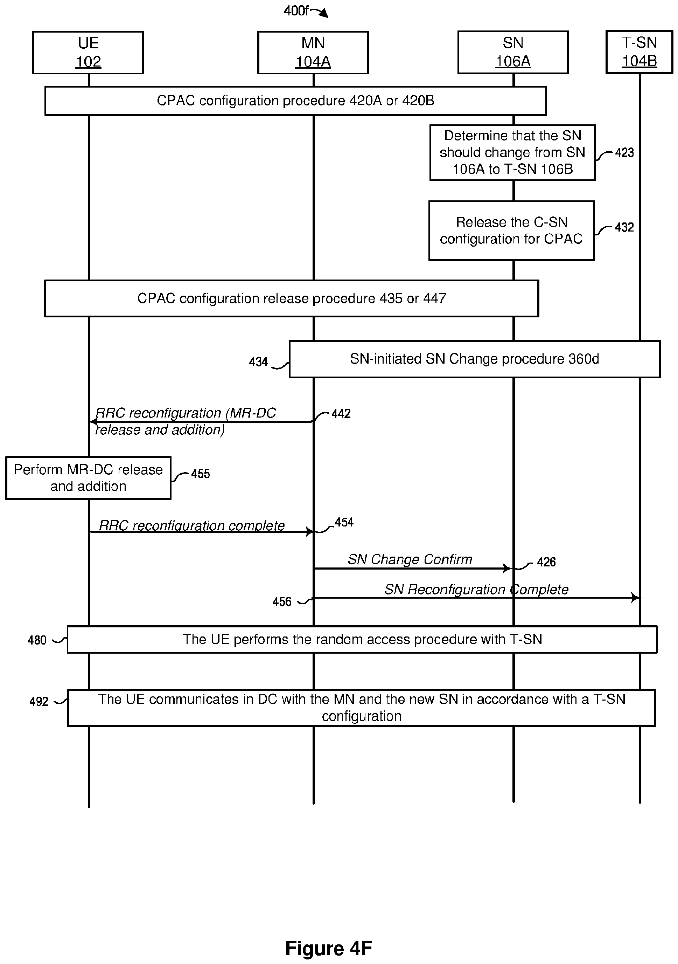

Referring to Fig. 4F, events in a scenario 400F similar to those discussed above are labeled with same references numbers. Further, events 423, 426 and 434 are similar to the events 323, 326 and 434, respectively, discussed above, except that the SN 106A determines 423 that the SN should change, then performs procedures 432 and 435/447, and then completes the procedure 434. Unlike the scenario of Fig. 400E in which SN change procedure is MN-initiated, the SN change procedure in the scenario 400F is SN-initiated.

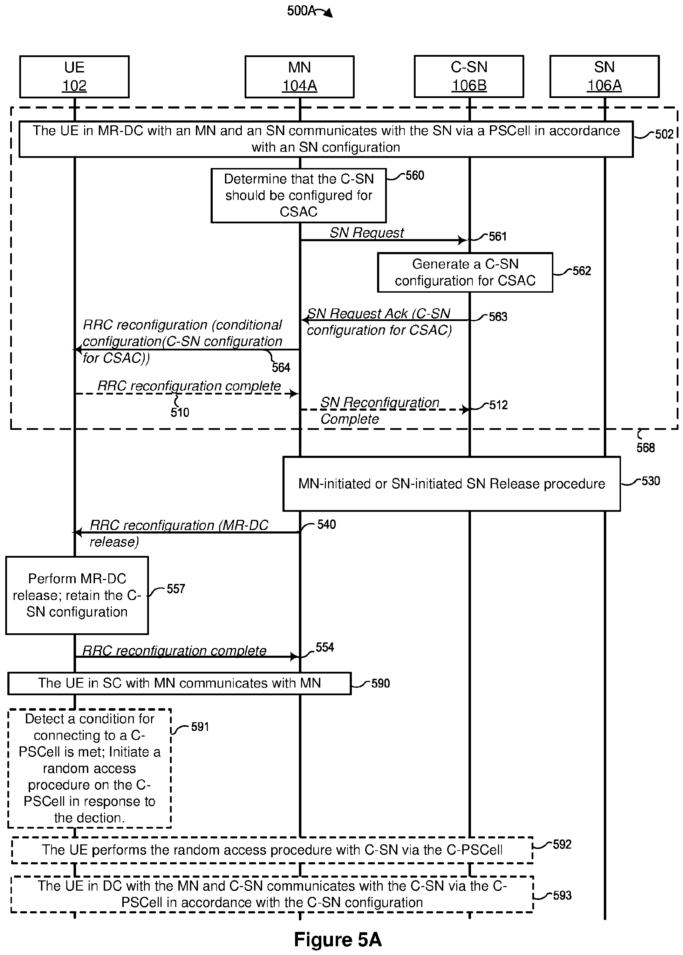

Several example scenarios involving CSAC are discussed next with reference to Figs. 5A-F. Generally speaking, the UE 102 in these scenarios does not release the conditional configuration (e.g., C-SN configuration) in response to an indication that the UE 102 should release MR-DC because the conditional configuration applies to CSAC rather than CPAC. However, the MN 104A can effectively override this action (retention of the conditional configuration) at the UE 102 by providing an explicit conditional configuration release indicator. Moreover, the UE 102 can determine whether it should release or retain conditional configuration in view of whether the conditional configuration is complete or partial.

Referring first to a scenario 500A of Fig. 5A, the base station 104A operates as a MN, the base station 106A operates as an SN, and base station 106B operates as a C-SN. At the beginning of this scenario, the UE 102 operates 502 in DC with the MN 104A and SN 106A and communicates UL PDUs and/or DL PDUs with MN 104A via a PCell, and communicates UL PDUs and/or DL PDUs with the SN 106A via a PSCell (*i.e*., a cell other than cell 126A).

The MN 104A determines 560 that it should configure the base station 106B as a C-SN for CSAC, such that the SN for the UE 102 would change from the SN 106B to the C-SN 106B. The MN 104A may determine that it should do so based on measurement result(s) from the UE 102, for example, or in response to an indication that the SN 106A requires a conditional SN change (*e.g., SN Change Required* message), which the SN 106A can send to the MN 104A. In response to the determination, the MN 104A sends 561 an *SN Request* message to the C-SN 106A for the CSAC. In response to receiving 561 the *SN Request* message, the C-SN 106B determines 562 that it should generate a C-SN configuration for CSAC, for the UE 102. The C-SN 106B transmits 563 an *SN Request Acknowledge* message including the C-SN configuration for the CSAC to the MN 104A. The C-SN configuration can include a configuration for a C-PSCell and for zero, one, or more C-SCells. In some implementations, the MN 104A may include the C-SN configuration message in an RRC container message. The MN 104A then includes the C-SN configuration for CSAC or the RRC container message in a conditional configuration field/IE and transmits 564 an RRC reconfiguration message including the conditional configuration field/IE to the UE 102. In some implementations, the UE 102 transmits 510 an RRC reconfiguration complete message to the MN 104A in response to the RRC reconfiguration message. The MN 104A can transmit 512 an *SN Reconfiguration Complete* message to the C-SN 106B in response to the RRC reconfiguration complete message. Events 502, 560-564, 510, and 512 collectively define a CSAC configuration procedure 568.

In some implementations, the C-SN 106B includes a radio bearer configuration for the conditional configuration in the *SN Request Acknowledge* message in event 563, and in turn the MN 104A may include the radio bearer configuration in the RRC reconfiguration message in event 540. The MN 104A may include the radio bearer configuration at the level of the RRC reconfiguration message, at the level of the conditional configuration element, or at the level of the RRC container message described above.

When transmitting 564 the RRC reconfiguration to the UE 102, the MN 104A can specify a condition that must be satisfied before the UE 102 applies the C-SN configuration for CSAC. The MN 104A can specify this condition at the level of the RRC reconfiguration message, at the level of the conditional configuration element, or at the level of the C-SN configuration for CSAC. In the conditional configuration element in the RRC reconfiguration message of the 564, the MN 104A can include a configuration ID to identify the C-SN configuration for CSAC.

In some implementations, the *SN Request* message is an *SN Addition Request* message, and the *SN Request Acknowledge* message is an *SN Addition Request Acknowledge* message. In other implementations, the *SN Request* message is an *SN Modification Request* message, and the *SN Request Acknowledge* message is an *SN Modification Request Acknowledge* message. In some implementations, the MN 104A indicates to the base station 106B, in the *SN Request* message, that the MN 104A requests that the base station 106A operate as a C-SN for the UE 102. The UE 102 determines that the conditional configuration includes the C-SN configuration so that the UE 102 may apply the C-SN configuration for the CSAC to communicate with the C-SN 106B (see optional events 591-593 below).

At some point, the MN 104A can perform 530 an MN-initiated SN Release procedure or an SN-initiated SN Release procedure with the SN 106A, which can be similar to the procedure 330 discussed above. The MN 104A then generates an RRC reconfiguration message indicating MR-DC release and transmits 540 the RRC reconfiguration message to the UE 102. The MN 104A can transmit 540 the RRC reconfiguration message before, during, or after performing the SN Release procedure.

The UE 102 performs 557 the MR-DC release but retains the C-SN configuration for CSAC or generally the conditional configuration, in response to receiving 540 the MR-DC release indicator in the RRC reconfiguration message. In some implementations, the UE 102 can determine that it should retain the C-SN configuration or the conditional configuration if the C-SN configuration is a complete and self-contained configuration (*i.e*. full configuration). However, when the C-SN configuration includes one or more configurations that apply "on top" of the SN configuration (*i.e*., delta configuration), the UE 102 may determine that it should release the C-SN configuration, and thus release the C-SN configuration or the conditional configuration in response to receiving 540 the RRC reconfiguration with an MR-DC release indicator.

In the scenario of Fig. 5A, the UE 102 releases 557 the MR-DC, transmits 554 a RRC reconfiguration message to the MN 104, and begins to operate 590 in SC with the MN 104A. To perform 557 the MR-DC release, the UE 102 releases an SRB3 as well as measurement configuration(s) (e.g., *measConfig*) and the SN configuration with which the SN 106A previously configured the UE 102.

Optionally, the UE 102 can determine 591 that a condition (or conditions) for connecting to the C-PSCell 126A is satisfied, and initiates 592 a random access procedure on the C-PSCell 126B in response to this determination. For convenience, this discussion may refer to the condition or a configuration in singular, but it will be understood that there may be multiple conditions, and that the conditional configuration can include one or multiple configuration parameters. In any case, the UE 102 performs 592 the random access procedure with the C-SN 106B via the C-PSCell 126B using a random access configuration included in the C-SN configuration. The UE 102 (if the UE 102 is in DC) may disconnect from the SN 106A (*i.e*., the PSCell and all of SCell(s) of the SN 106A if configured) in response to the event 591 or 592.

In some implementations, the random access procedure can be a four-step random access procedure or a two-step random access procedure. In other implementations, the random access procedure can be a contention-based random access procedure or a contention-free random access procedure. After the UE 102 successfully completes 592 the random access procedure, the C-SN 106B begins to operate as the SN 106B, and the UE 102 begins to operate 593 in DC with the MN 104A and the SN 106B. In particular, the UE 102 communicates 593 with the SN 106B via the C-PSCell 126B (*i.e.,* new PSCell 126B) in accordance with the C-SN configuration for the CSAC.

In some implementations, the C-SN 106B identifies the UE 102 if the C-SN 106B finds an identity of the UE 102 in a medium access control (MAC) protocol data unit (PDU) received from the UE 102 in the random access procedure (event 592). The C-SN 106B includes the identity of the UE 102 in the C-SN configuration. In other implementations, the C-SN 106B identifies the UE 102 if the C-SN 106B receives a dedicated random access preamble from the UE 102 in the random access procedure. The C-SN 106A includes the dedicated random access preamble in the C-SN configuration.

The SN configuration can include multiple configuration parameters for the UE 102 to communicate with the SN 106A via the PSCell 126A and zero, one, or more secondary cells (SCells) of the SN 106A. The multiple configuration parameters may configure radio resources for the UE 102 to communicate with the SN 106A via the PSCell 126B and zero, one, or more SCells of the SN 106A. The multiple configuration parameters may configure zero, one, or more radio bearers. The one or more radio bearers can include an SRB and/or DRBs.

In some implementations, the C-SN 106B specifies the one or more conditions in the C-SN configuration for CSAC. In other implementations, the MN 104A includes the C-SN configuration along with the one or more conditions in a conditional configuration element or in the RRC reconfiguration message. The MN 104A may generate the conditional configuration for the UE 102A or receive 563 the conditional configuration from the C-SN 106B.

In some implementations, the C-SN configuration includes a group configuration (*CellGroupConfig*) IE that configures the C-PSCell 126B and zero, one, or more C-SCells of the C-SN 106B. In one implementation, the C-SN configuration can be a *RRCReconfiguration* message, *RRCReconfiguration-IEs* or the *CellGroupConfig* IE conforming to 3GPP TS 38.331. In other implementations, the C-SN configuration includes a *SCG-ConfigPartSCG-r12* IE that configures the C-PSCell and may configure zero, one, or more C-SCells of the C-SN 106B. In one implementation, the C-SN configuration is an *RRCConnectionReconfiguration* message, *RRCConnectionReconfiguration-IEs* or the *ConfigPartSCG-r12* IE conforming to 3GPP TS 36.331.

In some implementations, the SN configuration includes a *CellGroupConfig* IE that configures the PSCell and may zero, one, or more SCells of the SN 106A. In one implementation, the SN configuration can be a *RRCReconfiguration* message, *RRCReconfiguration-IEs* or the *CellGroupConfig* IE conforming to 3GPP TS 38.331. In other implementations, the SN configuration can include a *SCG-ConfigPartSCG-r12* IE that configures the PSCell and may configure zero, one, or more SCells of the SN 106A. In one implementation, the SN configuration can be a *RRCConnectionReconfiguration* message, *RRCConnectionReconfiguration-IEs* or the *ConfigPartSCG-r12* IE conforming to 3GPP TS 36.331.

In some cases, the UE 102 may receive one or more conditions in the conditional configuration or in the RRC reconfiguration message (event 564). The UE 102 can use the one or more conditions to determine whether to connect to the C-PSCell 126B. If the UE 102 determines that the condition is satisfied, the UE 102 connects to the C-PSCell 126B. That is, the condition (or called triggering condition) triggers the UE 102 to connect to the C-PSCell 126B or to execute the C-SN configuration. If the UE 102 does not determine that the condition is satisfied, the UE 102 does not connect to the C-PSCell 126B.

In some implementations, the C-SN 106B can include a CU 172 and one or more DU 174 as illustrated in Fig. 1C. The CU 172 receives the *SN Request* message from the MN 104A and sends the *SN Request Acknowledge* message. The DU 174 may generate the C-SN configuration or part of the C-SN configuration (e.g., the identity of the UE 102, the dedicated random access preamble, the random access configuration) and send the C-SN configuration or part of the C-SN configuration to the CU 172. In case the DU 174 generates part of the C-SN configuration, the CU 172 may generate rest of the C-SN configuration. In one implementation, the DU 174 can perform the random access procedure (event 592) with the UE 102 and identify the UE 102 in the random access procedure. In response to the identification, the DU 174 communicates with the UE 102 using the C-SN configuration or part of the C-SN configuration. In another implementation, the DU 174 can perform the random access procedure (event 592) with the UE 102 and forward the identity of the UE 102 received in the MAC PDU in the random access procedure to the CU 172. The CU 172 identifies the UE 102 according to the identity of the UE 102. In response to the identification, the CU 172 and DU 174 communicates with the UE 102 using the rest of the C-SN configuration and part of the C-SN configuration respectively.

If the C-SN 106B identifies the UE 102 on the C-PSCell 126B during the event 592, the C-SN 106B begins to transmit downlink control information (DCI) command(s) on physical downlink control channel(s) (PDCCH(s)), reference signal(s) or data to the UE 102 via the C-PSCell 126B and/or one or more C-SCells (if configured in the C-SN configuration) according to some configuration parameters in the C-SN configuration. If the C-SN 106B identifies the UE 102 on the C-PSCell 126B during the event 592, the C-SN 106B can receive signal(s) on physical uplink control channel(s) (PUCCH(s)), sounding reference signal(s) or data from the UE 102 via the C-PSCell 126B and/or one or more C-SCells (if configured in the C-SN configuration) according to some configuration parameters in the C-SN configuration. The UE 102 receives the DCI command(s) on PDCCH(s), reference signal(s) or data from the C-SN 106B via the C-PSCell 126B and/or one or more C-SCells (if configured in the C-SN configuration) according to some configuration parameters in the C-SN configuration. The UE 102 may transmit signal(s) on PUCCH(s), sounding reference signal(s) or data to the C-SN 106B via the C-PSCell 126B and one or more C-SCells (if configured in the C-SN configuration) according to some configuration parameters in the C-SN configuration. In response to the identification, the C-SN 106B becomes SN 106B and determines that the C-PSCell 126B becomes PSCell 126B and the one or more C-SCells becomes one or more SCells.

As described above, the MN 104A and C-SN 106B configures the C-PSCell 126B to the UE 102 during the events 563 and 564 in advance, before the C-PSCell 126B becomes suitable for the UE 102. The UE 102 retains the C-SN configuration in response to the MR-DC release configured by the MN 104A in the RRC reconfiguration message. When the C-PSCell 126B becomes suitable for the UE 102 (*i.e*., the UE 102 detects the corresponding condition), the UE 102 performs the random access procedure with the C-PSCell to quickly change PSCell (i.e., change SN). In contrast to the immediate SN Addition procedure, the conditional SN addition technique discussed in this disclosure significantly reduces latency associated with DC configuration.

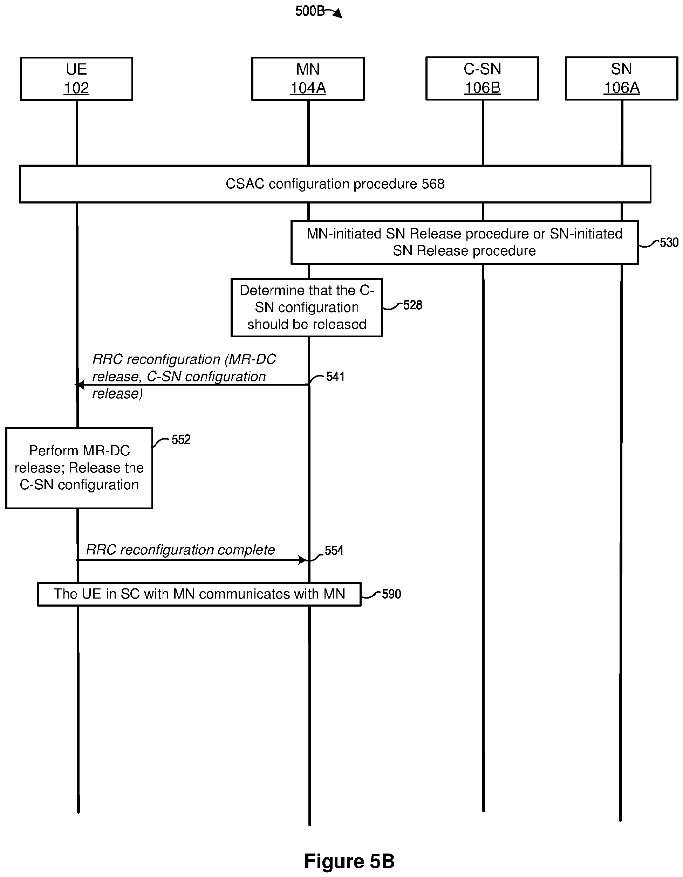

Next, a scenario 500B of Fig. 5B is generally similar to the scenario 500A, and events in this scenario similar to those discussed above are labeled with same references numbers. However, the MN 104A in this scenario transmits 541 an RRC reconfiguration including an MR-DC release indicator as well as a C-SN configuration release indicator (or, more generally, a conditional configuration release indicator). In other words, the MN 104A includes separate indicators for MR-DC and C-SN configuration. The UE 102 in this scenario releases 552 MR-DC in response to the MR-DC release indicator, and releases the C-SN configuration or the conditional configuration in response to the C-SN configuration release indicator.

In some implementations, the C-SN configuration release indicator includes a configuration identity or identifier (ID). The conditional configuration element in the RRC reconfiguration message of the event 564 for example can include this configuration ID to identify the C-SN configuration for CSAC.

In some implementations, the condition in the conditional configuration may be associated to at least one measurement configuration (*e.g., MeasConfig* IE) configured by the MN 104A to the UE 102. Each of the at least one measurement configuration is associated to a measurement identity (*e.g., MeasId* IE). In some implementations, the UE 102 may release the at least one measurement configuration if the UE 102 releases the C-SN configuration or the conditional configuration. In other implementations, the UE 102 does not release the at least one measurement configuration if the UE 102 releases the C-SN configuration or the conditional configuration. Instead, the UE 102 releases a measurement configuration in the at least one measurement configuration if the UE 102 identifies a measurement identity (associated to the measurement configuration) in a measurement identity to remove list field/IE (e.g., *measIdToRemoveList*) in the RRC reconfiguration message in event 541. The MN 104A may determine to release the measurement configuration in response to the MN-initiated or SN-initiated SN Release procedure so that the MN 104A includes the measurement identity to remove list field/IE in the RRC reconfiguration message in event 541.

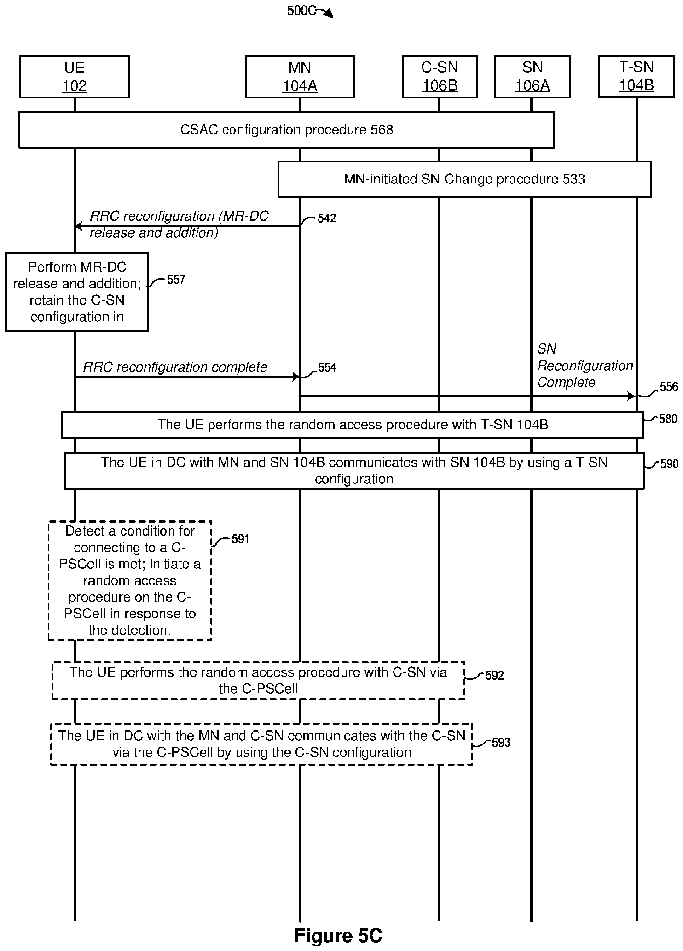

Now referring to Fig. 5C, a scenario 500C is generally similar to the scenario 500A, and events in this scenario similar to those discussed above are labeled with same references numbers. The MN 104A, the SN 106A, and the T-SN 104B perform 533 an MN-initiated SN change procedure, which can be similar to the MN-initiated SN Change Procedure 333 discussed above. The MN 104A generates an RRC reconfiguration message indicating MR-DC release and addition and transmits 542 the RRC reconfiguration message to the UE 102. In response, the UE 102 performs 557 the MR-DC release but retains the C-SN configuration for CSAC

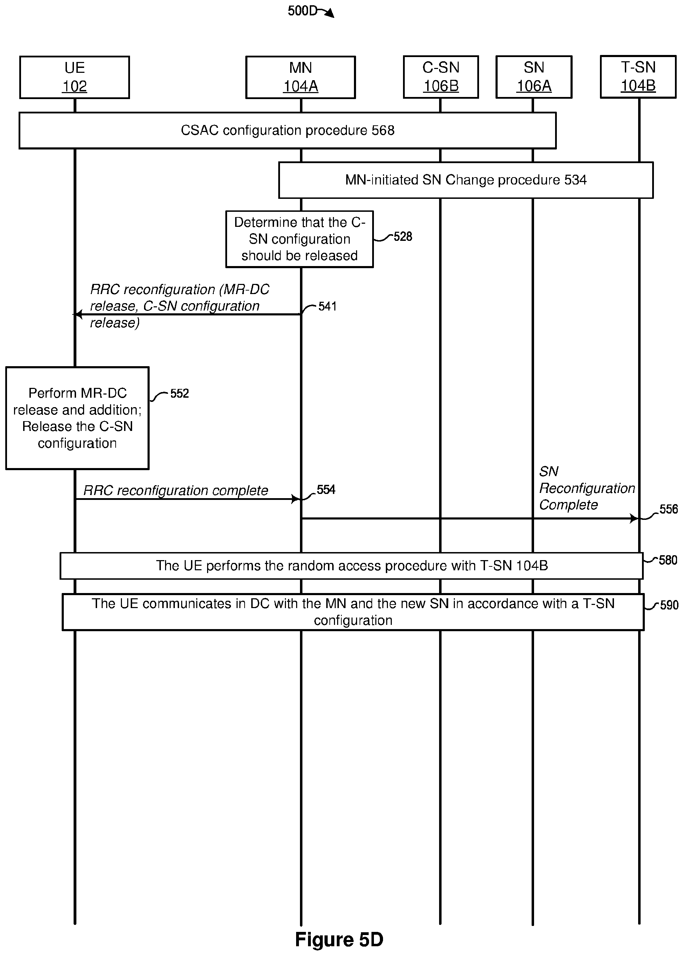

Fig. 5D illustrates another CSAC scenario 500D. Events similar to those discussed above are labeled with same references numbers in Fig. 5B. The SN 106A in this scenario performs an SN-initiated SN Change Procedure 534, similar to the procedure 334 discussed above with reference to Fig. 3D. The MN 104 then determines 528 that the UE 102 should release the C-SN configuration, and transmits 541 an RRC reconfiguration including an MR-DC release indicator as well as a C-SN configuration release indicator (or, more generally, a conditional configuration release indicator). In response, the UE 102 performs MR-DC release and addition and, in view of the explicit SN configuration release indicator, also releases the C-SN configuration.

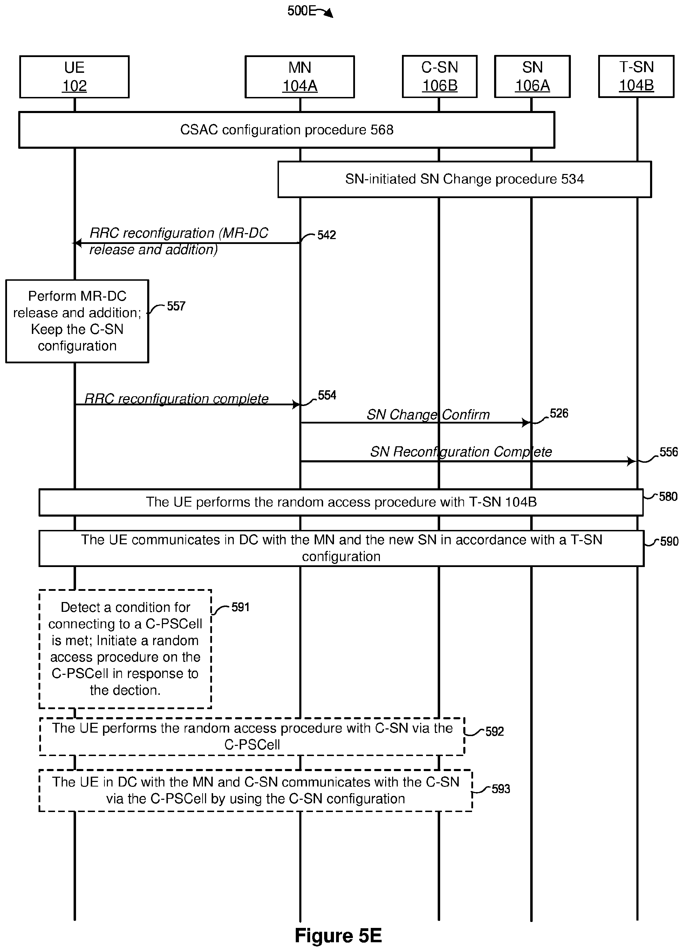

Now referring to Fig. 5E, a scenario 500E is similar to the scenario 500D discussed above, but here the MN 104a does not determine that the UE 102 should release the C-SN configuration. The MN 104A transmits 542 an RRC reconfiguration including an indication of MR-DC release and addition, and not including a C-SN release indicator. The UE 102 accordingly retains 557 the C-SN configuration in response to receiving 542 the RRC reconfiguration.

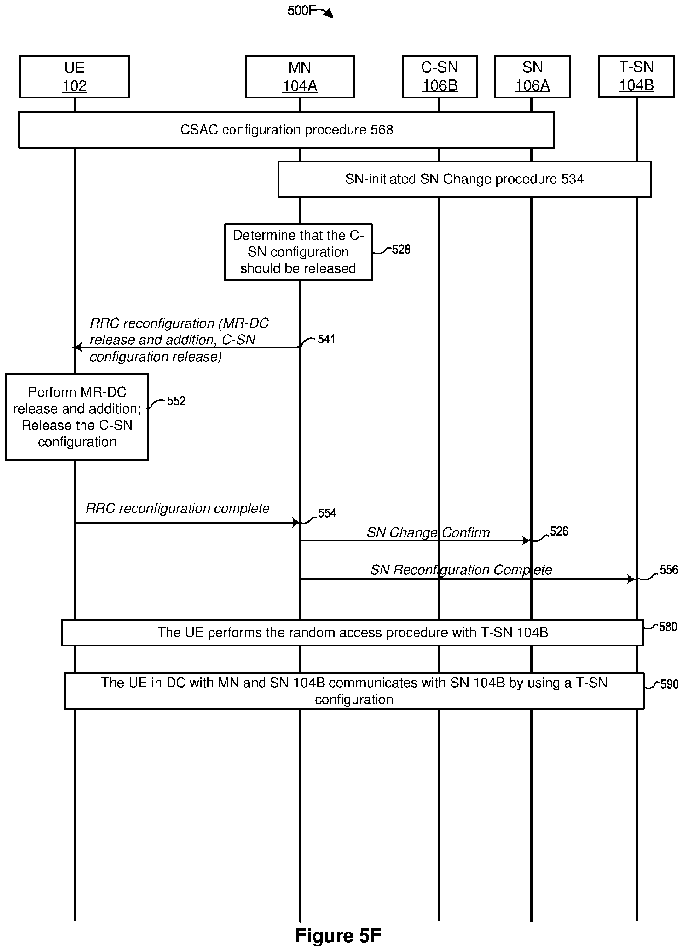

Finally, a scenario 500F of Fig. 5F is generally similar to the scenario 500A, and events in this scenario similar to those discussed above are labeled with same references numbers. However, the MN 104A in this scenario transmits 541 an RRC reconfiguration including an MR-DC release and addition indicator as well as a C-SN configuration release indicator (similar to the scenario of Fig. 5B, where the MR-DC indicator specified release only). Thus, the MN 104A includes separate indicators for MR-DC and C-SN configuration. The UE 102 in this scenario releases MR-DC 552 in response to the MR-DC release indicator, and releases the C-SN configuration in response to the C-SN configuration release indicator.

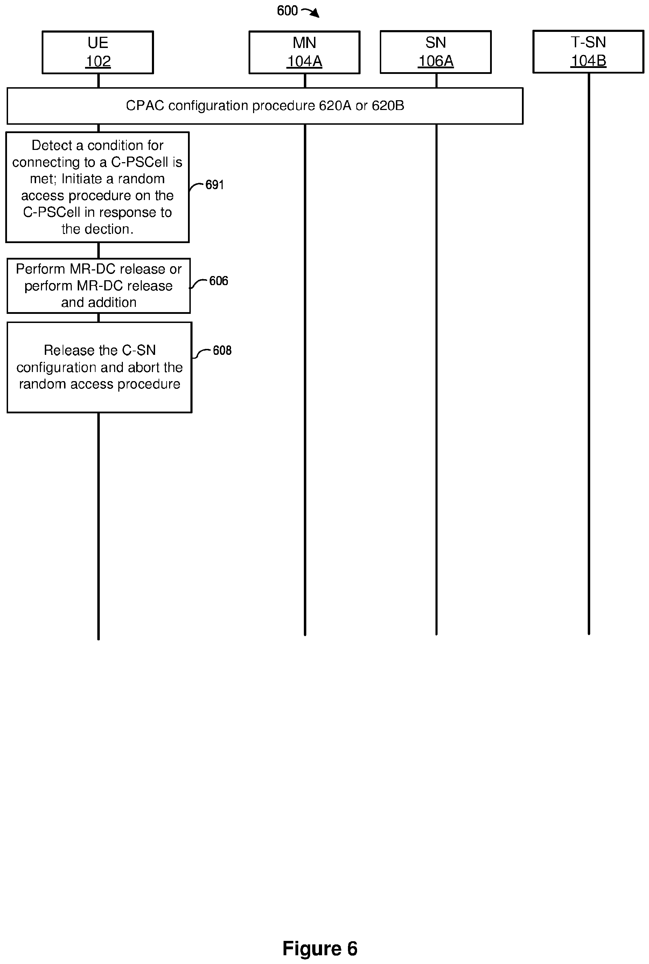

Fig. 6 illustrates an example scenario 600 that involves CPAC when the UE is already in DC with the MN and SN. In this scenario, the base station 104A operates as a MN, the base station 106A operates as a SN and the base station 104B operates as a T-SN.

The UE 102, the MN 104A, and the SN 106A first perform the CPAC configuration procedure 620A or 620B, which can be similar to the procedures 320A and 320B, respectively, discussed above. The UE 102 determines 691 that a condition (or conditions) for connecting to the C-PSCell 126A is satisfied and initiates a random access procedure on the C-PSCell 126A in response to the detection. The event 691 is similar to the event 591 discussed with reference to Figs. 5A, 5C, and 5E, except that the C-PSCell in Fig. 6 is the C-PSCell 126A, while the C-PSCell in Fig. 5A is the C-PSCell 126B.

During the random access procedure of the event 691, the UE may perform 606 MR-DC release or, in another scenario, MR-DC release and addition. In some scenarios, the UE 102 may perform 606 the MR-DC release as described for Figs. 3A and 3B. In other scenarios, the UE 102 may perform 606 the MR-DC release and addition as described for Figs. 3C and 3D. In yet other scenarios, the UE 102 may perform 606 the MR-DC release in response to MCG failure or an RRC connection reestablishment procedure. The UE 102 releases 608 the C-SN configuration and aborts the random access procedure in response to the MR-DC release or the MR-DC release and addition.

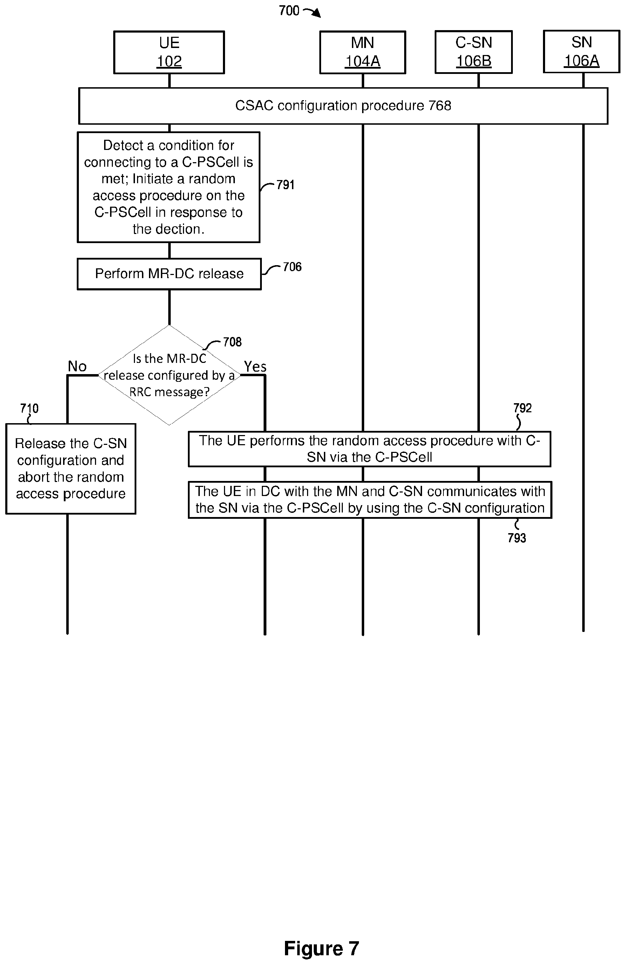

Next, Fig. 7 illustrates a scenario 700 that involves CSAC when the UE is already in DC with the MN and SN. In this scenario, the base station 104A operates as a MN, the base station 106A operates as a SN, and the base station 106B operates as a C-SN.

In the scenario 700, the UE 102, the MN 104A, the SN 106A and the C-SN 106B perform a CSAC configuration procedure 768, which can be similar to the procedure 568 discussed with reference to Figs. 5A-F. The UE 102 determines 791 a condition (or conditions) for connecting to the C-PSCell 126B is satisfied and initiates a random access procedure on the C-PSCell 126B in response to this determination. The event 791 can be similar to the event 591 discussed above.

While the UE 102 initiating or performing the random access procedure, the UE may perform 706 MR-DC release. In some scenarios, the UE 102 may perform 706 the MR-DC release as described for Figs. 3A and 3B. In other scenarios, the UE 102 may perform 706 the MR-DC release in response to MCG failure or an RRC connection reestablishment procedure. Then the UE 102 determines whether the MR-DC release is configured by an RRC message. For example, the RRC message can be an RRC reconfiguration message indicating the MR-DC release.

If the UE 102 determines 708 that MR-DC release is not occurring due an RRC message (e.g., if the MR-DC release is due to a radio link failure at the UE 102), the UE 102 releases 710 the C-SN configuration and aborts the random access procedure in response to the MR-DC release. If the MR-DC release is due to an RRC message, the UE 102 performs 792 the random access procedure with the C-SN 106 on the C-PSCell 126B, and the UE begins to operate 793 DC with the MN 104A and the C-SN 106B as described for events 592 and 593 discussed with reference to Fig. 5A.

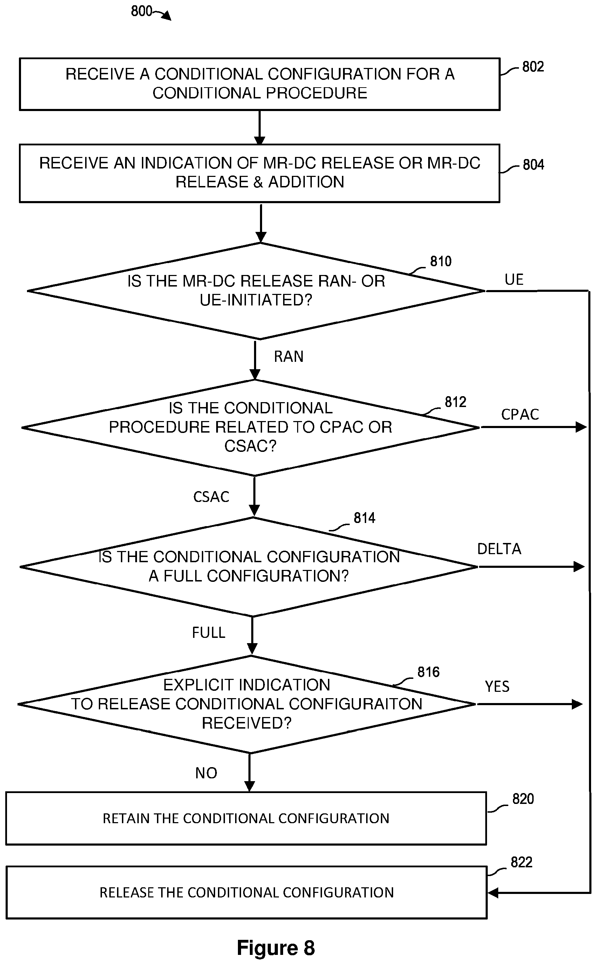

For further clarity, several example methods which the devices operating in the systems of Figs. 1A and 1B can implement are discussed next with reference to Figs. 8-12.

Referring first to Fig. 8, an example method 800 for managing a conditional configuration can be implemented in a suitable UE such as the UE 102 of Figs. 1A and 1B, as a set of instructions stored on a computer-readable medium and executable by processing hardware (e.g., one or more processors). For convenience, the method 800 is discussed below with reference to the UE 102.

The method 800 begins at block 802, where the UE 102 receives conditional configuration for a conditional procedure such as CPAC (event 320A or 320B of Figs. 3A-D, event 420A or 420B of Figs. 4A-F) or CSAC (event 568 of Figs. 5A-F), for example. Next, at block 804, the UE 102 receives an indication of MR-DC release (event 340 of Figs. 3A and 3B, event 540 of Fig. 5A) or MR-DC release and addition (event 342 of Figs. 4A and 4B, event 542 of Fig. 5C). The UE 102 then checks several conditions at blocks 810-816, which the UE 102 can do in any suitable order, and not necessarily in the example order illustrated in Fig. 8.

At block 810, the UE 102 determines whether the MR-DC is RAN-initiated or UE-initiated. When the MR-DC is UE-initiated (e.g., due to a radio link failure), the flow proceeds to block 822. Otherwise, the flow proceeds to block 812.

At block 812, the UE 102 determines whether the conditional configuration is related to CPAC (the scenarios of Figs. 3A-D and 4A-F) or CSAC (the scenarios of Figs. 5A-F). If the conditional configuration is related to CPAC, the flow proceeds to block 822. Otherwise, the flow proceeds to block 814.

At block 814, the UE 102 determines whether the conditional configuration is a delta configuration, in which case the flow proceeds to block 822, or a full configuration, in which case the flow proceeds to block 816.

At block 816, the UE 102 determines whether the UE 102 received, in addition to an MR-DC release indicator, an explicit conditional configuration release indicator (event 541 in Fig. 5B, 5D, and 5F). The flow proceeds to block 822 when an explicit conditional configuration release indicator is present. When an explicit conditional configuration release indicator is not present, the flow proceeds to block 820.

At block 820, the UE 102 retains the conditional configuration. In some scenarios (see Figs. 5A, 5C, and 5E), the UE 102 applies the conditional configuration subsequently to releasing MR-DC as a way to retain the conditional configuration.

On the other hand, at block 822, the UE 102 releases the conditional configuration. In particular, the UE 102 determines that it should not apply the conditional configuration for a candidate base station. In some implementations, the UE 102 releases the conditional configuration by removing the corresponding configuration parameters and the one or more conditions from the memory of the UE 102.

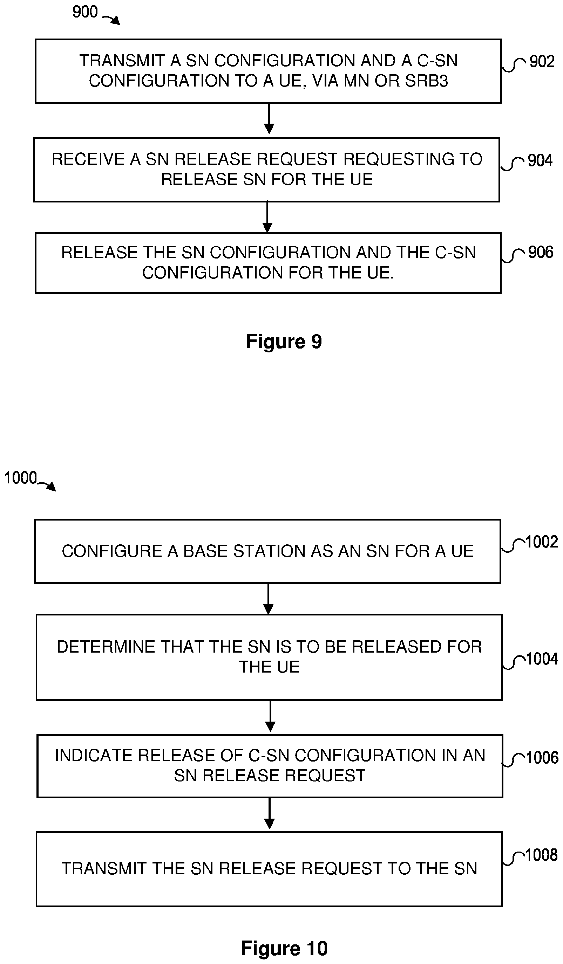

Now referring to Fig. 9, an example method 900 for managing a conditional configuration can be implemented in an SN of this disclosure as a set of instructions stored on computer-readable medium and executable by processing hardware (e.g., one or more processors). For convenience, the method 900 is discussed below with reference to the SN 106A.

At block 902, the SN 106A transmits an SN configuration and a C-SN configuration to a UE, via an MN (events 306, 308 of Fig. 3A, events 563 and 564 of Fig. 5A) or directly on an SRB3 (event 308 of Fig. 3B). At block 904, the SN 106A receives a request to release the SN for the UE (event 330 of Figs. 3A and 3B, event 331 of Fig. 3C, event 425 of Fig. 4A-C). At block 906, the SN 106A releases the SN configuration as well as the C-SN configuration for the UE (event 332 of Figs. 3A-3D, event 432 of Figs. 4A-4F).

Fig. 10 illustrates an example method 1000 for managing a conditional configuration, which can be implemented in an MN of this disclosure as a set of instructions stored on computer-readable medium and executable by processing hardware (e.g., one or more processors). For convenience, the method 1000 is discussed below with reference to the MN 104A.

At block 1002, the MN 104A configures a base station as an SN for a UE (event 302 of Fig. 3A). Next, at block 1004, the MN 104A determines that the SN is to be released for the UE. At block 1006, the MN 104A indicates release of the C-SN configuration in an SN release request. At block 1008, the MN 104A transmits the SN release request to the SN. These messages are discussed in connection with the event 330 of Fig. 3A and event 425 of Fig. 4A, for example.

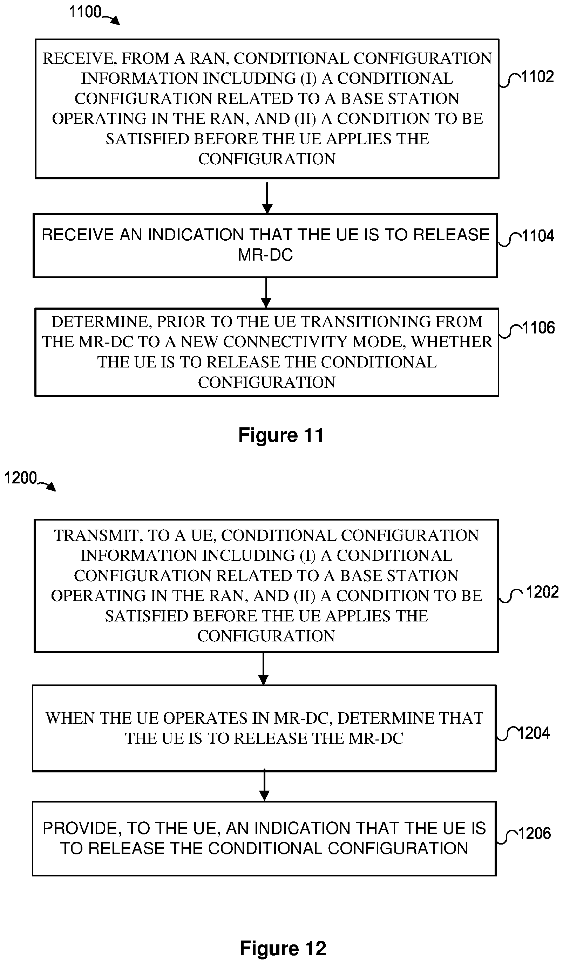

Fig. 11 is a flow diagram of an example method 1100 for configuration management when the UE operates in MR-DC, which can be implemented in a UE of this disclosure, as a set of instructions stored on computer-readable medium and executable by processing hardware (e.g., one or more processors), for example.

The method 1100 begins at block 1102, where the UE receives, from the RAN, conditional configuration information including (i) a conditional configuration related to a base station operating in the RAN, and (ii) a condition to be satisfied before the UE applies the configuration (event 320A or 320B of Figs. 3A-D; event 320A or 320B of Figs. 4A-F; event 568 of Figs. 5A-F).

At block 1104, the UE receives an indication that the UE is to release MR-DC (event 340 in Figs. 3A and 3B; event 342 of Fig. 3C; event 440 of Fig. 4A; event 470 of Fig. 4B-D; event 442 of Fig. 4E and 4F; event 540 of Fig. 5A; event 541 of Fig. 5B, 5D, and 5F; event 542 of Fig. 5C and 5E).

At block 1106, the UE determines, prior to transitioning to a new connectivity mode such as SC or MR-DC with a new SN, whether the UE should release the conditional configuration (event 350 of Figs. 3A and 3B; event 352 of Figs. 3C and 3D; event 451 of Fig. 4A-C, event 435 or 447 of Figs. 4A-F; event 557 of Fig. 5A, 5C, and 5E; event 552 of Fig. 5B, 5D, and 5F; blocks 810-822 of Fig. 8).

Fig. 12 is a flow diagram of an example method 1200 for processing configuration of a UE which can be implemented in a RAN of the disclosure, as a set of instructions stored on a computer-readable medium and executable by processing hardware (e.g., one or more processors), for example.

At block 1202, the RAN transmits conditional configuration information including (i) a conditional configuration related to a base station operating in the RAN, and (ii) a condition to be satisfied before the UE applies the configuration (event 320A or 320B of Figs. 3A-D; event 320A or 320B of Figs. 4A-F; event 568 of Figs. 5A-F).

At block 1204, the RAN determines that the UE is to release MR-DC. At block 1206, the RAN provides to the UE an indication that the UE is to release the conditional configuration (event 340 of Fig. 3A, 3B; event 342 of Fig. 3C and 3D; event 444 of Fig. 4A and 4B; event 445 of Fig. 4C; events 435 and 447 of Figs. 4D-4F; event 541 of Fig. 5B, 5D, and 5F).

The following description may be applied to the description above.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured (*e.g.,* as a special-purpose processor, such as a field programmable gate array (FPGA) or an application-specific integrated circuit (ASIC), a digital signal processor (DSP), etc.) to perform certain operations. A hardware module may also comprise programmable logic or circuitry (*e.g.,* as encompassed within a general-purpose processor or other programmable processor) that is temporarily configured by software to perform certain operations. The decision to implement a hardware module in dedicated and permanently configured circuitry, or in temporarily configured circuitry (*e.g.,* configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method in a user equipment, UE, (102) for configuration management when the UE operates in multi-radio dual connectivity (MR-DC), the method comprising:
receiving, by processing hardware (150) and from a radio access network, RAN, (105),
conditional configuration information including i) a conditional configuration related to a base station (104A, 104B, 106A, 106B) operating in the RAN, and ii) a condition to be satisfied before
the UE applies the configuration;
receiving, by the processing hardware and from the RAN, an indication that the UE is to release the MR-DC; and
releasing, by the processing hardware in response to the indication, the conditional configuration.

2. The method of claim 1, including receiving the indication from a base station (104A, 104B, 106A, 106B) operating as a master node (MN) to support the MR-DC at the UE (102).

3. The method of claim 1, including receiving the indication from a base station (104A, 104B, 106A, 106B) operating as a secondary node, SN, to support the MR-DC at the UE (102).

4. The method of any of claims 1-3, including:
receiving the indication that the UE (102) is to release the MR-DC in a command to reconfigure a radio connection between the UE and the RAN (105).

5. The method of any of the preceding claims, further comprising:
releasing the conditional configuration further in response to determining that the conditional configuration pertains to conditional primary secondary cell, PSCELL, addition or change.

6. The method of any of the preceding claims, wherein operating in the MR-DC includes operating in EUTRA-NR DC, EN-DC, with an MeNB and an SgNB.

7. The method of any of claims 1-5, wherein operating in the MR-DC includes operating in in NR-NR DC, NR-DC, with an MgNB and an SgNB.

8. The method of any of the preceding claims, further comprising:
releasing the MR-DC in response to the indication that the UE (102) is to release the MR-DC; and
operating, subsequently to releasing the MR-DC, in single connectivity, SC, with a base station (104A, 104B, 106A, 106B) that transmitted the indication that the UE is to release the MR-DC, as the new connectivity mode.

9. The method of any of the preceding claims, wherein releasing the conditional configuration includes releasing a measurement configuration.

10. The method of any of the preceding claims, wherein releasing the conditional configuration includes releasing a configuration parameter related to a radio bearer associated with a candidate PSCell, C-PSCELL.

11. A user equipment, UE, (102) comprising processing hardware (150) and configured to implement a method according to any of the preceding claims.

12. A method in a radio access network, RAN, (105) for configuring a user equipment, UE, (102), the method comprising:
transmitting, by the processing hardware (150) and to the UE, i) a conditional configuration related to a base station (104A, 104B, 106A, 106B) operating in the RAN, and ii) a condition to be satisfied before the UE applies the conditional configuration during a conditional procedure;
when the UE operates in multi-radio dual connectivity, MR-DC, determining, by the processing hardware, that the UE is to release the MR-DC; and
providing, by the processing and to the UE, an indication that the UE is to release the conditional configuration.

13. The method of claim 12, wherein providing the indication includes:
transmitting, by the processing hardware (150), a command to reconfigure a radio connection between the UE (102) and the RAN (105).

14. The method of claim 13, wherein providing the indication includes:
transmitting, in the command, an MR-DC release indicator indicating that the UE (102) is to release the MR-DC.

15. A base station (104A, 104B, 106A, 106B) comprising processing hardware (150) and configured to implement a method of any of claims 12-14.

## Patentansprüche

1. Verfahren in einem Benutzergerät, UE, (102) zur Konfigurationsverwaltung, wenn das UE in Multi-Radio Dual Connectivity (MR-DC) arbeitet, wobei das Verfahren Folgendes umfasst:
Empfangen, durch Verarbeitungshardware (150) und von einem Funkzugangsnetz, RAN, (105), von bedingten Konfigurationsinformationen, einschließlich (i) einer bedingten Konfiguration in Bezug auf eine in dem RAN arbeitende Basisstation (104A, 104B, 106A, 106B) und (ii) einer Bedingung, die erfüllt sein muss, bevor das UE die Konfiguration anwendet;
Empfangen, durch die Verarbeitungshardware und von dem RAN, einer Angabe, dass das UE die MR-DC freigeben soll; und
Freigeben der bedingten Konfiguration durch die Verarbeitungshardware als Reaktion auf die Angabe.

2. Verfahren nach Anspruch 1, das das Empfangen der Angabe von einer als Master-Knoten (MN) arbeitenden Basisstation (104A, 104B, 106A, 106B) einschließt, um die MR-DC am UE (102) zu unterstützen.

3. Verfahren nach Anspruch 1, das das Empfangen der Angabe von einer als Sekundärknoten (SN) arbeitenden Basisstation (104A, 104B, 106A, 106B) einschließt, um die MR-DC am UE (102) zu unterstützen.

4. Verfahren nach einem der Ansprüche 1-3, das Folgendes einschließt:
Empfangen des Hinweises, dass das UE (102) die MR-DC freigeben soll, in einem Befehl zum Umkonfigurieren einer Funkverbindung zwischen dem UE und dem RAN (105).

5. Verfahren nach einem der vorhergehenden Ansprüche, das ferner Folgendes umfasst:
Freigeben der bedingten Konfiguration weiter als Reaktion auf die Feststellung, dass sich die bedingte Konfiguration auf das bedingte Hinzufügen oder Ändern einer primären Sekundärzelle, PSCell, bezieht.

6. Verfahren nach einem der vorhergehenden Ansprüche, wobei das Arbeiten in MR-DC das Arbeiten in EUTRA-NR DC, EN-DC, mit einem MeNB und einem SgNB einschließt.

7. Verfahren nach einem der Ansprüche 1-5, wobei das Arbeiten in MR-DC das Arbeiten in NR-NR DC, NR-DC, mit einem MgNB und einem SgNB umfasst.

8. Verfahren nach einem der vorhergehenden Ansprüche, das ferner Folgendes umfasst:
Freigeben der MR-DC als Reaktion auf die Angabe, dass das UE (102) die MR-DC freigeben soll; und
Arbeiten, im Anschluss an das Freigeben der MR-DC, in Einzelkonnektivität, SC, mit einer Basisstation (104A, 104B, 106A, 106B), die die Angabe, dass das UE die MR-DC freigeben soll, übertragen hat, als neuen Konnektivitätsmodus.

9. Verfahren nach einem der vorhergehenden Ansprüche, wobei das Freigeben der bedingten Konfiguration das Freigeben einer Messkonfiguration einschließt.

10. Verfahren nach einem der vorhergehenden Ansprüche, wobei das Freigeben der bedingten Konfiguration das Freigeben eines Konfigurationsparameters in Bezug auf einen mit einem Kandidaten-PSCell, C-PSCell, assoziierten Funkträger einschließt.

11. Benutzergerät, UE, (102), das Verarbeitungshardware (150) umfasst und zum Implementieren eines Verfahrens nach einem der vorhergehenden Ansprüche konfiguriert ist.

12. Verfahren in einem Funkzugangsnetz, RAN, (105) zum Konfigurieren eines Benutzergeräts, UE, (102), wobei das Verfahren Folgendes umfasst:
Übertragen, durch die Verarbeitungshardware (150) und an das UE, i) einer bedingten Konfiguration in Bezug auf eine in dem RAN arbeitende Basisstation (104A, 104B, 106A, 106B) und ii) einer Bedingung, die erfüllt sein muss, bevor das UE die bedingte Konfiguration während einer bedingten Prozedur anwendet;
Bestimmen, durch die Verarbeitungshardware, wenn das UE in Multi-Radio Dual Connectivity, MR-DC, arbeitet, dass das UE die bedingte Konfiguration freigeben soll; und
Bereitstellen, durch die Verarbeitungshardware und an das UE, einer Angabe, dass das UE die bedingte Konfiguration freigeben soll.

13. Verfahren nach Anspruch 12, wobei das Bereitstellen der Angabe Folgendes einschließt:
Übertragen, durch die Verarbeitungshardware (150), eines Befehls zum Umkonfigurieren einer Funkverbindung zwischen dem UE (102) und dem RAN (105).

14. Verfahren nach Anspruch 13, wobei das Bereitstellen der Angabe Folgendes einschließt:
Übertragen, in dem Befehl, eines MR-DC-Freigabe-Indikators, der angibt, dass das UE (102) die MR-DC freigeben soll.

15. Basisstation (104A, 104B, 106A, 106B), die Verarbeitungshardware (150) umfasst und zum Implementieren eines Verfahrens nach einem der Ansprüche 12-14 konfiguriert ist.

## Revendications

1. Procédé de gestion de la configuration d'un équipement utilisateur, UE, (102) lorsque l'UE fonctionne en double connectivité multiradio (MR-DC), le procédé comprenant les étapes consistant à :
recevoir, par un matériel de traitement (150) et à partir d'un réseau d'accès radio, RAN, (105), des informations de configuration conditionnelle incluant (i) une configuration conditionnelle liée à une station de base (104A, 104B, 106A, 106B) fonctionnant dans le RAN, et (ii) une condition à remplir avant que l'UE n'applique la configuration ;
recevoir, par le matériel de traitement et de la part de la RAN, une indication selon laquelle l'UE doit libérer le MR-DC ; et
libérer, par le matériel de traitement en réponse à l'indication, la configuration conditionnelle.

2. Procédé selon la revendication 1, incluant la réception de l'indication d'une station de base (104A, 104B, 106A, 106B) fonctionnant en tant que noeud principal (MN) pour prendre en charge le MR-DC au niveau de l'UE (102).

3. Procédé selon la revendication 1, incluant la réception de l'indication d'une station de base (104A, 104B, 106A, 106B) fonctionnant comme un noeud secondaire (SN) pour prendre en charge le MR-DC à l'UE (102).

4. Procédé selon l'une quelconque des revendications 1 à 3, incluant l'étape consistant à :
recevoir l'indication que l'UE (102) doit libérer le MR-DC dans une commande de reconfiguration d'une connexion radio entre l'UE et le RAN (105).

5. Procédé selon l'une quelconque des revendications précédentes, comprenant en outre l'étape consistant à :
libérer la configuration conditionnelle en réponse à la détermination que la configuration conditionnelle concerne l'ajout ou la modification conditionnel(le) d'une cellule primaire secondaire, PSCell.

6. Procédé selon l'une quelconque des revendications précédentes, dans lequel le fonctionnement en MR-DC inclut le fonctionnement en EUTRA-NR DC, EN-DC, avec un MeNB et un SgNB.

7. Procédé selon l'une quelconque des revendications 1 à 5, dans lequel le fonctionnement en MR-DC inclut le fonctionnement en NR-NR DC, NR-DC, avec un MgNB et un SgNB.

8. Procédé selon l'une quelconque des revendications précédentes, comprenant en outre l'étape consistant à :
libérer le MR-DC en réponse à l'indication que l'UE (102) doit libérer le MR-DC ; et
fonctionner, après avoir libéré le MR-DC, en connectivité unique, SC, avec une station de base (104A, 104B, 106A, 106B) qui a transmis l'indication selon laquelle l'UE doit libérer le MR-DC, en tant que nouveau mode de connectivité.

9. Procédé selon l'une quelconque des revendications précédentes, dans lequel la libération de la configuration conditionnelle inclut la libération d'une configuration de mesure.

10. Procédé selon l'une quelconque des revendications précédentes, dans lequel la libération de la configuration conditionnelle inclut la libération d'un paramètre de configuration lié à un support radio associé à une cellule PSCell candidate, C-PSCell.

11. Équipement utilisateur, UE, (102) comprenant un matériel de traitement (150) et configuré pour mettre en oeuvre un procédé selon l'une quelconque des revendications précédentes.

12. Procédé dans un réseau d'accès radio, RAN, (105) pour configurer un équipement utilisateur, UE, (102), le procédé comprenant les étapes consistant à :
transmettre, par le matériel de traitement (150) et à l'UE, i) une configuration conditionnelle relative à une station de base (104A, 104B, 106A, 106B) fonctionnant dans le RAN, et ii) une condition à remplir avant que l'UE n'applique la configuration conditionnelle au cours d'une procédure conditionnelle ;
lorsque l'UE fonctionne en double connectivité multiradio, MR-DC, déterminer, par le matériel de traitement, que l'UE doit libérer la MR-DC ; et
fournir, par le traitement et à l'UE, une indication selon laquelle l'UE doit libérer la configuration conditionnelle.

13. Procédé selon la revendication 12, dans lequel la fourniture de l'indication inclut l'étape consistant à :
transmettre, par le matériel de traitement (150), une commande de reconfiguration d'une connexion radio entre l'UE (102) et le RAN (105).

14. Procédé selon la revendication 13, dans lequel la fourniture de l'indication inclut l'étape consistant à :
transmettre, dans la commande, un indicateur de libération du MR-DC indiquant que l'UE (102) doit libérer le MR-DC.

15. Station de base (104A, 104B, 106A, 106B) comprenant un matériel de traitement (150) et configurée pour mettre en oeuvre un procédé selon l'une quelconque des revendications 12 à 14.
